# EUROPEAN PATENT APPLICATION

(11) **EP 4 801 124 A1**
(43) Date of publication of application: **02.09.2026**
(21) Application number: 23956478.4
(22) Date of filing: 26.10.2023
(51) Int. Cl.: H04W 52/04

(54) **INFORMATION TRANSMISSION METHOD, TERMINAL, AND NETWORK DEVICE**

(71) Applicant: Beijing Xiaomi Mobile Software Co., Ltd., Beijing 100085 (CN)
(72) Inventor: ZHAO, Qun, Beijing 100085 (CN); DUAN, Gaoming, Beijing 100085 (CN)
(74) Representative: Stöckeler, Ferdinand
(86) International application number: PCT/CN2023/126955
(87) International publication number: WO 2025/086231

(57) **Abstract**

The present disclosure relates to an information transmission method, a terminal, and a network device. The method executed by a terminal comprises: determining a power boost factor; and on the basis of the power boost factor, determining a transmission power for transmitting first information based on an OTFS system. Thus, a terminal can determine, on the basis of a power boost factor, a transmission power for transmitting first information based on an OTFS system, and then transmit the first information by means of the corresponding transmission power, thereby increasing the transmission power for transmitting the first information based on the OTFS system and improving the performance of the communication system.

## Description

### TECHNICAL FIELD

The present disclosure relates to the field of communication technology, and specifically to an information transmission method, a terminal, and a network device.

### BACKGROUND

Fading caused by a multipath delay may be effectively suppressed by adding a cyclic prefix (CP) in orthogonal frequency division multiplexing (OFDM) systems.

### SUMMARY

The information transmission method, terminal, and network device provided in the disclosure are used to solve the problem of how to determine a transmission power of first information based on an orthogonal time-frequency space (OTFS) system.

The embodiments of the present disclosure provide an information transmission method, a terminal, and a network device.

According to a first aspect of the embodiments of the present disclosure, an information transmission method is provided. The method is performed by a terminal and includes: determining a power boosting factor; and determining a transmission power for transmitting first information based on an OTFS system according to the power boosting factor.

In the above embodiment, the terminal may determine the transmission power for transmitting first information based on the OTFS system according to the power boosting factor, and then transmit the first information with the corresponding transmission power, which may increase the transmission power for transmitting the first information based on the OTFS system and improve the performance of the communication system.

According to a second aspect of the embodiments of the present disclosure, an information transmission method is provided. The method is performed by a network device and includes: determining a power boosting factor; determining a transmission power for transmitting first information based on an OTFS system according to the power boosting factor and
transmitting the first information according to the transmission power of the first information.

In the above embodiment, the network device may determine the transmission power for transmitting the first information based on the OTFS system according to the power boosting factor, and then transmit the first information with the corresponding transmission power, which may increase the transmission power for transmitting the first information based on the OTFS system and improve the performance of the communication system.

According to a third aspect of the embodiments of the present disclosure, an information transmission method is provided, including: determining, by a network device, a power boosting factor; determining, by the network device, a transmission power for transmitting first information based on an OTFS system according to the power boosting factor; sending, by the network device, indication information to a terminal, in which the indication information indicates the power boosting factor; receiving, by the terminal, the indication information from the network device; determining, by the terminal, the power boosting factor; and determining, by the terminal, the transmission power for transmitting the first information based on the OTFS system according to the power boosting factor.

In the above embodiment, the terminal and network device may determine the transmission power for transmitting the first information based on the OTFS system based on the power boosting factor, and then transmit the first information with the corresponding transmission power, which may increase the transmission power for transmitting the first information based on the OTFS system and improve the performance of the communication system.

According to a fourth aspect of the embodiments of the present disclosure, a terminal is provided, including: a processing module, configured to determine a power boosting factor, in which the processing module is configured to determine a transmission power for transmitting first information based on an OTFS system according to the power boosting factor.

According to a fifth aspect of the embodiments of the present disclosure, a network device is provided, including: a processing module, configured to determine a power boosting factor, in which the processing module is configured to determine a transmission power for transmitting first information based on an OTFS system according to the power boosting factor.

According to a sixth aspect of the embodiments of the present disclosure, a terminal is provided, including: one or more processors and a memory coupled to the one or more processors and storing instructions that, when executed by the processor, cause the terminal to perform the method according to the first aspect.

According to a seventh aspect of the embodiments of the present disclosure, a network device is provided, including: one or more processors and a memory coupled to the one or more processors and storing instructions that, when executed by the processor, cause the network device to perform the method according to the second aspect.

According to an eighth aspect of the embodiments of the present disclosure, a communication system is provided, including: a terminal and a network device, in which the terminal is configured to perform the method according to the first aspect, and the network device is configured to perform the method according to the second aspect.

According to a ninth aspect of the embodiments of the present disclosure, a storage medium for storing instructions is provided. When the instructions are running on a communication device, the communication device is caused to perform the method according to any one of the first aspect or the second aspect.

### BRIEF DESCRIPTION OF THE DRAWINGS

To more clearly illustrate the technical solutions in the embodiments of the disclosure, accompanying drawings used for the description of the embodiments are introduced below. The following drawings are only some embodiments of the disclosure and do not impose specific limitations on the protection scope of the disclosure.
FIG. 1 is a diagram of an architecture of a communication system according to embodiments of the present disclosure.
FIG. 2 is a diagram of transmitting a reference signal based on an OTFS system according to an embodiment of the present disclosure.
FIG. 3 is a flowchart illustrating an information transmission method according to an embodiment of the present disclosure.
FIG. 4 is a diagram of a guard period for protecting first information a communication method according to the embodiments of the present disclosure.
FIG. 5 is a flowchart illustrating another information transmission method according to an embodiment of the present disclosure.
FIG. 6 is a flowchart illustrating another information transmission method according to an embodiment of the present disclosure.
FIG. 7 is a flowchart illustrating another information transmission method according to an embodiment of the present disclosure.
FIG. 8 is a flowchart illustrating another information transmission method according to an embodiment of the present disclosure.
FIG. 9A is a block diagram illustrating a terminal according to an embodiment of the present disclosure.
FIG. 9B is a block diagram illustrating a network device according to an embodiment of the present disclosure.
FIG. 10A is a block diagram illustrating a communication device according to an embodiment of the present disclosure.
FIG. 10B is a block diagram illustrating a chip according to an embodiment of the present disclosure.

### DETAILED DESCRIPTION

The embodiments of the present disclosure provide an information transmission method, a terminal, and a network device.

In a first aspect, the embodiments of the present disclosure provide an information transmission method. The method is performed by a terminal and includes: determining a power boosting factor; and determining a transmission power for transmitting first information based on an OTFS system according to the power boosting factor.

In the above embodiment, the terminal may determine the transmission power for transmitting first information based on the OTFS system according to the power boosting factor, and then transmit the first information with the corresponding transmission power, which may increase the transmission power for transmitting the first information based on the OTFS system and improve the performance of the communication system.

In some embodiments in combination with the first aspect, in some embodiments, determining by the terminal, the power boosting factor includes: determining a guard period for transmitting the first information based on the OTFS system; and determining the power boosting factor according to the guard period.

In the above embodiments, the terminal may determine the power boosting factor according to the guard period for transmitting the first information based on the OTFS system.

In some embodiments in combination with the first aspect, determining by the terminal, the power boosting factor according to the guard period includes: determining the power boosting factor according to a first quantity and a second quantity, in which the first quantity is a number of resource elements (REs) in the guard period, and the second quantity is a number of REs occupied by the first information; determining the power boosting factor according to a third quantity and a second quantity, in which the third quantity is a number of REs in the guard period for collecting multipath energy of the first information, and the second quantity is a number of REs occupied by the first information; or determining the power boosting factor according to a fourth quantity and a second quantity, in which the fourth quantity is a number of REs in the guard period with the same delay as the first information, and the second quantity is a number of REs occupied by the first information.

In some embodiments in combination with the first aspect, in some embodiments, determining by the terminal, the power boosting factor includes: receiving indication information sent by a network device, in which the indication information indicates the power boosting factor; and determining the power boosting factor according to the indication information.

In the above embodiments, the terminal may determine the power boosting factor based on the indication information from the network device.

In some embodiments in combination with the first aspect, in some embodiments, receiving by the terminal, the indication information from the network device includes: receiving a broadcast message sent by the network device, in which the broadcast message includes the indication information; receiving a radio resource control (RRC) signaling sent by the network device, in which the RRC signaling includes the indication information; or receiving downlink control information (DCI) sent by the network device, in which the DCI includes the indication information.

In the above embodiments, the terminal may receive indication information from the network device that reuses the existing signaling or message, which may reduce the overhead of signaling or messages.

In some embodiments in combination with the first aspect, in some embodiments, the first information includes at least one of: a channel state information reference signal (CSI-RS), a demodulation reference signal (DMRS), or a data symbol.

In some embodiments in combination with the first aspect, in some embodiments, the first information is a DMRS, and determining by the terminal, the power boosting factor includes: determining a first guard period for transmitting the DMRS based on the OTFS system; determining a second guard period for transmitting a data symbol based on the OTFS system; and determining a power boosting factor of the DMRS according to the first guard period and the second guard period.

In some embodiments in combination with the first aspect, in some embodiments, determining by the terminal, the power boosting factor of the DMRS according to the first guard period and the second guard period includes: determining the power boosting factor of the DMRS according to a fifth quantity and a sixth quantity, in which the fifth quantity is a total number of REs in the first guard period and the second guard period, and the sixth quantity is a number of REs occupied by the DMRS; determining the power boosting factor of the DMRS according to a seventh quantity and a sixth quantity, in which the seventh quantity is a number of REs in the first guard period and the second guard period for collecting multipath energy of the DMRS and the data symbol, and the sixth quantity is a number of REs occupied by the DMRS; or determining the power boosting factor of the DMRS according to an eighth quantity and a sixth quantity, in which the eighth quantity is a number of REs in the first guard period and the second guard period with the same delay as the DMRS, and the sixth quantity is a number of REs occupied by the DMRS.

In some embodiments in combination with the first aspect, in some embodiments, the first information is a DMRS, and determining by the terminal, the transmission power for transmitting the first information based on the OTFS system according to the power boosting factor includes: determining a transmission power for transmitting the DMRS as a product of the power boosting factor and energy per resource element (EPRE) on each RE of a data symbol, according to a power boosting factor of the DMRS.

In some embodiments in combination with the first aspect, in some embodiments, the DMRS is a first DMRS of a physical uplink shared channel (PUSCH), and the data symbol is a first data symbol of the PUSCH, or the DMRS is a second DMRS of a physical downlink shared channel (PDSCH), and the data symbol is a second data symbol of the PDSCH.

In some embodiments in combination with the first aspect, in some embodiments, the first information is a CSI-RS, and determining by the terminal, the transmission power for transmitting the first information based on the OTFS system according to the power boosting factor includes: determining a transmission power for transmitting the CSI-RS as a product of the power boosting factor and EPRE of second information, according to a power boosting factor of the CSI-RS.

In some embodiments in combination with the first aspect, in some embodiments, the second information is: a secondary synchronization signal (SSS) in an orthogonal frequency division multiplexing (OFDM) system; an SSS in the OTFS system; a DMRS of a physical broadcast channel (PBCH) in the OTFS system; or a data portion of the PBCH in the OTFS system.

In some embodiments in combination with the first aspect, in some embodiments, the first information is a data symbol, and determining by the terminal, the transmission power for transmitting the first information based on the OTFS system according to the power boosting factor includes: determining a transmission power for transmitting the data symbol as a product of EPRE of the data symbol and the power boosting factor, according to a power boosting factor of the data symbol.

In some embodiments in combination with the first aspect, in some embodiments, the data symbol is a first data symbol of a PUSCH or a second data symbol of a PDSCH.

In a second aspect, the embodiments of the present disclosure provide an information transmission method. The method is performed by a network device and includes: determining a power boosting factor; and determining a transmission power for transmitting first information based on an OTFS system according to the power boosting factor.

In the above embodiments, the network device may determine the transmission power for transmitting the first information based on the OTFS system according to the power boosting factor, and then transmit the first information with the corresponding transmission power, which may increase the transmission power for transmitting the first information based on the OTFS system and improve the performance of the communication system.

In some embodiments in combination with the second aspect, in some embodiments, the method further includes: determining a guard period for transmitting the first information based on the OTFS system; and determining the power boosting factor according to the guard period.

In the above embodiments, the network device may determine the power boosting factor according to the guard period for transmitting the first information based on the OTFS system.

In some embodiments in combination with the second aspect, in some embodiments, determining by the network device, the power boosting factor according to the guard period includes: determining the power boosting factor according to a first quantity and a second quantity, in which the first quantity is a number of REs in the guard period, and the second quantity is a number of REs occupied by the first information; determining the power boosting factor according to a third quantity and a second quantity, in which the third quantity is a number of REs in the guard period for collecting multipath energy of the first information, and the second quantity is a number of REs occupied by the first information; or determining the power boosting factor according to a fourth quantity and a second quantity, in which the fourth quantity is a number of REs in the guard period with the same delay as the first information, and the second quantity is a number of REs occupied by the first information.

In some embodiments in combination with the second aspect, in some embodiments, the method further includes: sending indication information to a terminal, in which the indication information indicates the power boosting factor.

In the above embodiments, the network device may indicate the power boosting factor to the terminal.

In some embodiments in combination with the second aspect, in some embodiments, sending by the network device, the indication information to the terminal includes: sending a broadcast message to the terminal, in which the broadcast message includes the indication information; sending an RRC signaling to the terminal, in which the RRC signaling includes the indication information; or sending DCI to the terminal, in which the DCI includes the indication information.

In the above embodiments, the network device may reuse the existing signaling or message to send the indication information to the terminal, which may reduce the overhead of signaling or messages.

In some embodiments in combination with the second aspect, in some embodiments, the first information includes at least one of: a CSI-RS, a DMRS, or a data symbol.

In some embodiments in combination with the second aspect, in some embodiments, the first information is a DMRS, and determining by the network device, the power boosting factor includes: determining a first guard period for transmitting the DMRS based on the OTFS system; determining a second guard period for transmitting a data symbol based on the OTFS system; and determining a power boosting factor of the DMRS according to the first guard period and the second guard period.

In some embodiments in combination with the second aspect, in some embodiments, determining by the network device, the power boosting factor of the DMRS according to the first guard period and the second guard period includes: determining the power boosting factor of the DMRS according to a fifth quantity and a sixth quantity, in which the fifth quantity is a total number of REs in the first guard period and the second guard period, and the sixth quantity is a number of REs occupied by the DMRS; determining the power boosting factor of the DMRS according to a seventh quantity and a sixth quantity, in which the seventh quantity is a number of REs in the first guard period and the second guard period for collecting multipath energy of the DMRS and the data symbol, and the sixth quantity is a number of REs occupied by the DMRS; or determining the power boosting factor of the DMRS according to an eighth quantity and a sixth quantity, in which the eighth quantity is a number of REs in the first guard period and the second guard period with the same delay as the DMRS, and the sixth quantity is a number of REs occupied by the DMRS.

In some embodiments in combination with the second aspect, in some embodiments, the first information is a DMRS, and determining by the network device, the transmission power for transmitting the first information based on the OTFS system according to the power boosting factor includes: determining a transmission power for transmitting the DMRS as a product of the power boosting factor and EPRE of a data symbol, according to a power boosting factor of the DMRS.

In some embodiments in combination with the second aspect, in some embodiments, the DMRS is a first DMRS of a PUSCH, and the data symbol is a first data symbol of the PUSCH, or the DMRS is a second DMRS of a PDSCH, and the data symbol is a second data symbol of the PDSCH.

In some embodiments in combination with the second aspect, in some embodiments, the first information is a CSI-RS, and determining by the network device, the transmission power for transmitting the first information based on the OTFS system according to the power boosting factor includes: determining a transmission power for transmitting the CSI-RS as a product of the power boosting factor and EPRE of second information, according to a power boosting factor of the CSI-RS.

In some embodiments in combination with the second aspect, in some embodiments, the second information is: an SSS in an OFDM system; an SSS in the OTFS system; a DMRS of a PBCH in the OTFS system; or a data portion of the PBCH in the OTFS system.

In some embodiments in combination with the second aspect, in some embodiments, the first information is a data symbol, and determining by the network device, the transmission power for transmitting the first information based on the OTFS system according to the power boosting factor includes: determining a transmission power for transmitting the data symbol as a product of EPRE of the data symbol and the power boosting factor, according to a power boosting factor of the data symbol.

In some embodiments in combination with the second aspect, in some embodiments, the data symbol is a first data symbol of a PUSCH or a second data symbol of a PDSCH.

In a third aspect, the embodiments of the present disclosure provide an information transmission method, including: determining, by a network device, a power boosting factor; determining, by the network device, a transmission power for transmitting first information based on an OTFS system according to the power boosting factor; sending, by the network device, indication information to a terminal, in which the indication information indicates the power boosting factor; receiving, by the terminal, the indication information from the network device; determining, by the terminal, the power boosting factor; and determining, by the terminal, the transmission power for transmitting the first information based on the OTFS system according to the power boosting factor.

In a fourth aspect, the embodiments of the present disclosure provide a terminal, including at least one of a transceiving module or a processing module, in which the terminal is configured to perform optional implementations of the first aspect.

In a fifth aspect, the embodiments of the present disclosure provide a network device, including at least one of a transceiving module or a processing module, in which the network device is configured to perform optional implementations of the second aspect.

In a sixth aspect, the embodiments of the present disclosure provide a terminal, including: one or more processors and a memory coupled to the one or more processors and storing instructions that, when executed by the processor, cause the terminal to perform optional implementations of the first aspect.

In a seventh aspect, the embodiments of the present disclosure provide a network device, including: one or more processors and a memory coupled to the one or more processors and storing instructions that, when executed by the processor, cause the terminal to perform optional implementations of the second aspect.

In an eighth aspect, the embodiments of the present disclosure provide a communication system, including: a terminal and a network device, in which the terminal is configured to perform the method according to optional implementations of the first aspect, and the network device is configured to perform the method according to optional implementations of the second aspect.

In a ninth aspect, the embodiments of the present disclosure provide a storage medium for storing instructions. When the instructions are running on a communication device, the communication device is caused to perform the method according to optional implementations of the first aspect or the second aspect.

In a tenth aspect, the embodiments of the present disclosure provide a program product. When the program product is executed by a communication device, the communication device is caused to perform the method according to optional implementations of the first aspect or the second aspect.

In an eleventh aspect, the embodiments of the present disclosure provide a computer program. When the computer program is running on a computer, the computer is caused to perform the method according to optional implementations of the first aspect or the second aspect.

In a twelfth aspect, the embodiments of the present disclosure provide a chip or chip system. The chip or the chip system includes a processing circuit, configured to perform the method according to optional implementations of the first aspect or the second aspect.

It may be understood that the terminal, the network device, the communication system, the storage medium, the program product, the computer program, the chip, or the chip system are all used to perform the method in the embodiments of the present disclosure. Therefore, for beneficial effects they may achieve, reference may be made to the beneficial effects in the corresponding method, which will not be repeated here.

The embodiments of the present disclosure provide an information transmission method, a terminal, and a network device. In some embodiments, the terms such as information transmission method, information processing method, and communication method may be used interchangeably.

Embodiments of the disclosure are not exhaustive, but are only illustrative, and are not intended to be a specific limitation on the protection scope of the disclosure. In the absence of contradiction, each step in a certain embodiment may be implemented as an independent embodiment, and respective steps may be arbitrarily combined. For example, a solution after removing some steps in a certain embodiment may also be implemented as an independent embodiment, and the order of the steps in a certain embodiment may be arbitrarily exchanged. In addition, optional implementations in a certain embodiment may be arbitrarily combined. In addition, respective embodiments may be arbitrarily combined, for example, some or all steps of different embodiments may be arbitrarily combined, and a certain embodiment may be arbitrarily combined with optional implementations of other embodiments.

In various embodiments of the disclosure, unless otherwise specified or there is a logical conflict, the terms and/or descriptions between the embodiments are consistent and reference to each other may be made, and the technical features in different embodiments may be combined to form a new embodiment based on their internal logical relationships.

The terms used in the embodiments of the disclosure are only for the purpose of describing specific embodiments and are not intended to limit the disclosure.

In the embodiments of the disclosure, unless otherwise specified, elements expressed in the singular form, such as "a", "an", "the", "above", "said", "aforementioned", "this", etc., may mean "one and only one", or "one or more", "at least one", etc. For example, when articles such as "a", "an", "the" in English translation are used, the noun after the article may be understood as a singular expression or a plural expression.

In the embodiments of the present disclosure, "a plurality of" means two or more.

In some embodiments, the terms such as "at least one of", "one or more", "a plurality of", "multiple", etc. may be used interchangeably.

In some embodiments, the terms such as "at least one of A, B", "A and/or B", "in one case, A; in another case, B", "in response to one case, A; in response to another case, B", etc. may include the following technical solutions according to situations: in some embodiments, A (A is executed independently of B); in some embodiments, B (B is executed independently of A); in some embodiments, one is selected from A and B to be executed (A and B are selectively executed); in some embodiments, A and B (both A and B are executed). When there are more branches such as A, B, C, etc., the above is applicable.

In some embodiments, the descriptions such as "A or B", etc. may include the following technical solutions according to situations: in some embodiments, A (A is executed independently of B); in some embodiments, B (B is executed independently of A); in some embodiments, one is selected from A and B to be executed (A and B are selectively executed). When there are more branches such as A, B, C, etc., the above is applicable.

The prefixes such as "first" and "second" in the embodiments of the disclosure are only used to distinguish different descriptive objects, and do not constitute restrictions on the position, order, priority, quantity or content of the descriptive objects. For the statement of the descriptive objects, reference may be made to the description in the context of the claims or embodiments, and it should not constitute redundant restrictions due to the use of prefixes. For example, if the descriptive object is "field", the ordinal number before the "field" in the "first field" and the "second field" does not limit the position or order between the "fields", and the terms "first" and "second" do not limit whether the "fields" they modify are in the same message, nor do they limit the order of the "first field" and the "second field". For another example, if the descriptive object is "level", the ordinal number before the "level" in the "first level" and the "second level" does not limit the priority between the "levels". For another example, a number of descriptive objects is not limited by the ordinal number, and may be one or more. Taking the "first apparatus" as an example, a number of "apparatuses" may be one or more. In addition, the objects modified by different prefixes may be the same or different. For example, if the descriptive object is "an apparatus", then the "first apparatus" and the "second apparatus" may be the same apparatus or different apparatuses, and their types may be the same or different. For another example, if the descriptive object is "information", then the "first information" and the "second information" may be the same information or different information, and their contents may be the same or different.

In some embodiments, "including A", "containing A", "used to indicate/indicating A", and "carrying A" may be interpreted as directly carrying A or indirectly indicating A.

In some embodiments, the terms such as "in response to...", "in response to determining...", "in the case of/that...", "at the time of...", "when...", "if...", "in case of/that...", etc. may be used interchangeably.

In some embodiments, the terms such as "greater than", "greater than or equal to", "not smaller than", "more than", "more than or equal to", "not less than", "higher than", "higher than or equal to", "not lower than", and "above" may be replaced with each other, and the terms such as "smaller than", "smaller than or equal to", "not greater than", "less than", "less than or equal to", "no more than", "lower than", "lower than or equal to", "not higher than", and "below" may be used interchangeably.

In some embodiments, the apparatus, etc. may be interpreted as physical or virtual, and their names are not limited to the names recorded in the embodiments. In some case, the terms such as "apparatus", "equipment", "device", "circuit", "network element", "node", "function", "unit", "section", "system", "network", "chip", "chip system", "entity", and "subject" may be used interchangeably.

In some embodiments, "network" may be interpreted as a device included in a network, for example, an access network device, a core network device, etc.

In some embodiments, the terms such as "access network device (AN device)", "radio access network (RAN) device", "base station (BS)", "radio base station", "fixed station", and in some embodiments may also be understood as "node", "access point", "transmission point (TP)", "reception point (RP)", "transmission/reception point (TRP)", "panel", "antenna panel", "antenna array", "cell", "macro cell", "small cell", "femto cell", "pico cell", "sector", "cell group", "serving cell", "carrier", "component carrier", "bandwidth part (BWP)" may be used interchangeably.

In some embodiments, the terms such as "terminal", "terminal device", "user equipment (UE)", "user terminal", "mobile station (MS)", "mobile terminal (MT)", "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client" may be used interchangeably.

In some embodiments, the access network device, the core network device, or the network device may be replaced with the terminal. For example, the structure where communication between access network devices, core network devices, or network devices and terminals is replaced with communication between multiple terminals (e.g., device-to-device (D2D), vehicle-to-everything (V2X), etc.) may also be applied to various embodiments of the disclosure. In this case, the terminal may also be configured to have all or part of the functions of the access network device. In addition, the terms such as "uplink" and "downlink" may be replaced with the terms (e.g., "sidelink") corresponding to the communication between terminals. For example, uplink channels or downlink channels may be replaced with side channels, and uplink links or downlink links may be replaced with side links.

In some embodiments, the terminal may be replaced with the access network device, the core network device, or the network device. In this case, the access network device, the core network device, or the network device may also be configured with all or part of the functions of the terminal.

In some embodiments, obtaining data, information, etc. shall comply with laws and regulations of a country where it is located.

In some embodiments, data, information, etc. may be obtained after agreed by a user.

In addition, each element, each row, or each column in tables of embodiments of the present disclosure may be implemented as an independent embodiment. Any combination of elements, rows, or columns may also be implemented as an independent embodiment.

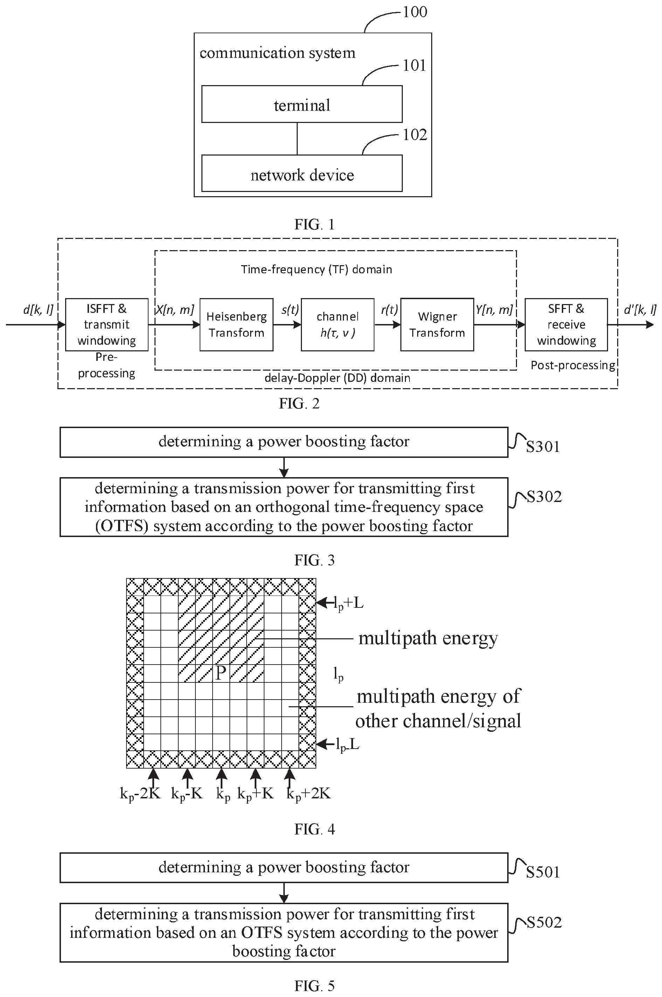

FIG. 1 is an architecture diagram of a communication system according to the embodiments of the present disclosure.

As shown in FIG. 1, The communication system 100 includes a terminal 101 and a network device 102.

In some embodiments, the terminal 101 comprises, for example, at least one of a mobile phone, a wearable device, an Internet of Things device, or a car, a smart car, and a Pad, with a communication function, a computer with a wireless transceiving function, a virtual reality (VR) terminal, an augmented reality (AR) terminal, a wireless terminal in industrial control, a wireless terminal in self-driving, a wireless terminal in a remote medical surgery, a wireless terminal in a smart grid, a wireless terminal in a transportation safety, a wireless terminal in a smart city, or a wireless terminal in a smart home, etc., which is not limited herein.

In some embodiments, the network device 102 may include at least one of an access network device or a core network device.

In some embodiments, the access network device is, for example, a node or device that connects the terminal to a wireless network. The access network device may include at least one of an evolved NodeB (eNB), a next generation eNB (ng-eNB), a next generation NodeB (gNB) in a 5G communication system, a node B (NB), a home node B (HNB), a home evolved nodeB (HeNB), a wireless backhaul device, a radio network controller (RNC), a base station controller (BSC), a base transceiver station (BTS), a baseband unit (BBU), a mobile switching center, a base station in a 6G communication system, an Open RAN, a Cloud RAN, a base station in another communication system, an access node in a wireless fidelity (Wi-Fi) system, which is not limited herein.

In some embodiments, the core network device may be a device including a first network function, a second network function, etc. or may be a plurality of devices or device groups, each of which includes all or part of the first network function, the second network function, etc. The network function may be virtual or physical. The core network includes, for example, at least one of an evolved packet core (EPC), a 5G core network (5GCN), or a next generation core (NGC).

In some embodiments, the first network function is, for example, the access and mobility management function (AMF).

In some embodiments, the first network function is used for access control and mobility management of terminal access to an operator network, such as functions including mobility state management, allocation of temporary user identity (ID), authentication and authorization of users, etc., and its name is not limited herein.

It may be understood that the communication system in the embodiments of the present disclosure is for more clearly illustrating the technical solutions in the embodiments of the present disclosure and does not constitute a limitation on the technical solutions in the embodiments of the present disclosure. Those skilled in the art may understand that with the evolution of system architectures and the emergence of new service scenarios, the technical solutions in the embodiments of the present disclosure are also applicable to similar technical problems.

The following embodiments of the disclosure may be applied to the communication system 100 or part of the subjects shown in FIG. 1, but are not limited herein. The subjects shown in FIG. 1 are examples, and the communication system may include all or part of the subjects in FIG. 1, or may include other subjects than those shown in FIG. 1. The number and the form of the subjects are arbitrary. The subjects may be physical or virtual. The connection relationships between the subjects are examples. The subjects may be connected or disconnected, and the connection may be in any manner, which may be a direct connection or an indirect connection, or may be a wired connection or a wireless connection.

The embodiments of the disclosure may be applied to long term evolution (LTE), LTE-advanced (LTE-A), LTE-beyond (LTE-B), SUPER 3G, IMT-Advanced, a 4th generation mobile communication system (4G), a 5th generation mobile communication system (5G), 5G new radio (NR), future radio access (FRA), new radio access technology (RAT), new radio (NR), new radio access (NX), future generation radio access (FX), a global system for mobile communications (GSM (registered trademark)), CDMA2000, ultra mobile broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), a public land mobile network (PLMN) network, a device-to-device (D2D) system, a machine-to-machine (M2M) system, an internet of things (IoT) system, vehicle-to-everything (V2X), systems using other communication methods, and next-generation systems based on them. In addition, the plurality of systems may also be combined (for example, a combination of LTE or LTE-A and 5G, etc.) for application.

Orthogonal frequency division multiplexing (OFDM) has been widely used in cellular mobile networks. Adding a cyclic prefix (CP) may effectively address the impact of multipath delay. However, the performance of OFDM systems still deteriorates in time-varying channels. For high radio frequencies or high movement speeds of the terminal, such as in high-speed rail scenarios, the Doppler frequency shift and Doppler spread of a radio channel are relatively large, which causes inter-carrier interference (ICI) in the OFDM systems. Although using a larger sub-carrier space (SCS) may reduce the impact of Doppler, the length of the CP is also reduced proportionally for a given overhead, which may make the CP insufficient to counteract the impact of multipath delay.

Orthogonal time-frequency space (OTFS) has been proposed to address the impact of relatively high Doppler. In the OTFS system, as shown in FIG. 2, the data is first mapped to two-dimensional grid points in a delay-Doppler (DD) domain, and then transformed to two-dimensional grid points in a time-frequency (TF) domain through Inverse Symplicit Finite Fourier Transform (ISFFT). Next, symbols in the TF domain may be transmitted through a multi-carrier system (Heisenberg transform). For example, OFDM systems may be used for transmission.

After time-domain signals in the OTFS system passes through the time-varying channel *h(τ,ν)*, a receiver first transforms the received signals into the TF domain (Wigner transform) and then performs a Sine Fourier transform (SFFT) to restore them into the DD domain. The grid points in the DD and TF domains are collectively referred to as resource elements (REs). In the OTFS system, after ISFFT transformation, data symbols on each RE in the DD domain are extended to all REs in the TF domain. That is, they have undergone the same frequency selectivity and time diversity of all REs in the TF domain. Therefore, all data symbols in the DD domain may be well approximated as having experienced the same time-invariant channel. This property directly affects the design of reference signals for the OTFS system. In an ideal situation, the symbol received by the receiver in the DD domain is equal to two-dimensional circular convolution of the symbol of the transmitter in the DD domain and the channel *h(τ,ν)* in the DD domain.

Since time-varying channels may be equivalent to time-invariant channels in the DD domain by way of the above property of the OTFS system, complete frequency diversity and time diversity are obtained. For the relatively high Doppler, the performance of the OTFS system is far superior to that of the OFDM system. Meanwhile, two-dimensional circular convolution characteristics of the OTFS system in the DD domain also brings some new requirements for the system design and increases the processing complexity.

In the OTFS system, due to its two-dimensional circular convolution characteristics in the DD domain, any symbol in the DD domain is extended to multiple REs in the DD domain at the receiver. To eliminate inter-symbol interference caused by the above two-dimensional circular convolution characteristics, a guard period may be inserted when transmitting the first information based on the OTFS system. The RE in the DD domain occupied by the guard period is not used to carry signals, or in other words, a number of symbols carried is 0. It is an urgent problem to be solved that how the transmission power for transmitting the first information based on the OTFS system is determined.

In view of the above problem, the embodiments of the present disclosure provide an information transmission method, a terminal, and a network device. In detail, the terminal determines a power boosting factor; and determines a transmission power for transmitting first information based on an OTFS system according to the power boosting factor. Therefore, the terminal may determine the transmission power for transmitting the first information based on the OTFS system according to the power boosting factor, and then transmit the first information with the corresponding transmission power, which may increase the transmission power for transmitting the first information based on the OTFS system and improve the performance of the communication system.

FIG. 3 is a diagram of an information transmission method according to an embodiment of the present disclosure. As shown in FIG. 3, embodiments of the disclosure relate to an information transmission method, which includes the following steps S301-S302.

At S301, a terminal determines a power boosting factor.

In some embodiments, the terminal determines the power boosting factor based on a protocol agreement, or an indication from the network device, or an implementation.

In some embodiments, determining by the terminal, the power boosting factor includes: receiving indication information sent by a network device, in which the indication information indicates the power boosting factor; and determining the power boosting factor according to the indication information.

In embodiments of the present disclosure, the terminal may receive the indication information sent by the network device. When the indication information indicates the power boosting factor, the terminal may determine the power boosting factor according to the indication information.

For example, the terminal receives the indication information sent by the network device, in which the indication information indicates that the power boosting factor for transmitting the first information based on the OTFS system is 4, and then the terminal may determine that the power boosting factor is 4.

In some embodiments, receiving by the terminal, the indication information from the network device includes: receiving a broadcast message sent by the network device, in which the broadcast message includes the indication information; receiving an RRC signaling sent by the network device, in which the RRC signaling includes the indication information; or receiving DCI sent by the network device, in which the DCI includes the indication information.

In embodiments of the disclosure, the terminal receives the broadcast message sent by the network device, in which the broadcast message includes the indication information, and the indication information indicates the power boosting factor for transmitting the first information based on the OTFS system. Therefore, the terminal may determine the power boosting factor for transmitting the first information based on the OTFS system.

In embodiments of the disclosure, the terminal receives the RRC signaling sent by the network device, in which the RRC signaling includes the indication information, and the indication information indicates the power boosting factor for transmitting the first information based on the OTFS system. Therefore, the terminal may determine the power boosting factor for transmitting the first information based on the OTFS system.

In embodiments of the disclosure, the terminal receives the DCI sent by the network device, in which the DCI includes the indication information, and the indication information indicates the power boosting factor for transmitting the first information based on the OTFS system. Therefore, the terminal may determine the power boosting factor for transmitting the first information based on the OTFS system.

In some embodiments, the terminal determines a guard period for transmitting the first information based on the OTFS system based on a protocol agreement, or an indication from the network device, or an implementation.

In some embodiments, determining by the terminal, the power boosting factor according to the guard period includes: determining the power boosting factor according to a first quantity of REs in the guard period and a second quantity of REs occupied by the first information; or determining the power boosting factor according to a third quantity of REs in the guard period for collecting multipath energy of the first information and a second quantity of REs occupied by the first information; or determining the power boosting factor according to a fourth quantity of REs in the guard period with the same delay as the first information and a second quantity of REs occupied by the first information.

In embodiments of the present disclosure, in a case that the terminal determines the guard period for transmitting the first information based on the OTFS system, the terminal may determine the power boosting factor according to the first quantity of REs in the guard period and the second quantity of REs occupied by the first information.

For example, the terminal determines the power boosting factor as a ratio of the first quantity to the second quantity, according to the first quantity of REs in the guard period and the second quantity of REs occupied by the first information.

For example, the terminal determines the power boosting factor as a sum of the ratio of the first quantity to the second quantity of REs occupied by the first information and an offset value, according to the first quantity of REs in the guard period and the second quantity of REs occupied by the first information.

For example, in a case that the terminal determines, according to the first quantity of REs in the guard period and the second quantity of REs occupied by the first information, the power boosting factor as the sum of the ratio of the first quantity to the second quantity of REs occupied by the first information and the offset value, the first quantity of REs in the guard period is 5, the second quantity of REs occupied by the first information is 1, and the offset value is 1, the power boosting factor may be thus determined as 5/1+1=6.

It needs to be noted that the above example is only for illustration. Other methods may be used to determine the power boosting factor according to the guard period, and the offset value may also be other values, which are not limited specifically in the embodiments of the disclosure.

In embodiments of the present disclosure, in a case that the terminal determines the guard period for transmitting the first information based on the OTFS system, the terminal may determine the power boosting factor according to the third quantity of REs in the guard period for collecting multipath energy of the first information and the second quantity of REs occupied by the first information.

For example, the terminal determines the power boosting factor as a ratio of the third quantity to the second quantity, or determines the power boosting factor as a sum of the ratio of the third quantity to the second quantity and an offset value.

For example, in a case that the terminal determines the power boosting factor as the sum of the ratio of the third quantity to the second quantity and the offset value, the third quantity of REs in the guard period for collecting multipath energy of the first information is 3, the second quantity of REs occupied by the first information is 1, and the offset value is 1, then the power boosting factor may be thus determined as 3/1+1=4.

It needs to be noted that the above example is only for illustration. Other methods may be used to determine the power boosting factor according to the guard period, and the offset value may also be other values, which are not limited specifically in the embodiments of the disclosure.

In embodiments of the present disclosure, in a case that the terminal determines the guard period for transmitting the first information based on the OTFS system, the terminal may determine the power boosting factor according to the fourth quantity of REs in the guard period with the same delay as the first information and the second quantity of REs occupied by the first information.

For example, the terminal determines the power boosting factor as a ratio of the fourth quantity to the second quantity, or determines the power boosting factor as a sum of the ratio of the fourth quantity to the second quantity and an offset value.

For example, in a case that the terminal determines the power boosting factor as the sum of the ratio of the fourth quantity to the second quantity and the offset value, the fourth quantity of REs in the guard period with the same delay as the first information is 3, the second quantity of REs occupied by the first information is 1, and the offset value is 1, the power boosting factor may be thus determined as 3/1 + 1 = 4.

It needs to be noted that the above example is only for illustration. Other methods may be used to determine the power boosting factor according to the guard period, and the offset value may also be other values, which are not limited specifically in the embodiments of the disclosure.

In some embodiments, the first information includes at least one of a CSI-RS, a DMRS, or a data symbol.

In some embodiments, the first information is a DMRS, and determining by the terminal, the power boosting factor for transmitting the first information based on the OTFS system includes: determining a first guard period for transmitting the DMRS based on the OTFS system; determining a second guard period for transmitting a data symbol based on the OTFS system; and determining a power boosting factor of the DMRS according to the first guard period and the second guard period.

In embodiments of the present disclosure, in a case that the first information is a DMRS, the terminal may determine the first guard period for transmitting the DMRS based on the OTFS system and the second guard period for transmitting the data symbol based on the OTFS system, and then determine the power boosting factor of the DMRS according to the first guard period and the second guard period.

It may be understood that, in a case that the terminal determines the first guard period for transmitting the DMRS based on the OTFS system, the first guard period may be set when transmitting the DMRS based on the OTFS system, and the terminal may perform no uplink transmission within the first guard period when sending the DMRS based on the OTFS system, and/or the terminal may receive the DMRS within the first guard period when receiving the DMRS based on the OTFS system.

It may be understood that, in a case that the terminal determines the second guard period for transmitting the data symbol based on the OTFS system, the second guard period may be set when transmitting the data symbol based on the OTFS system, and the terminal may perform no uplink transmission within the second guard period when sending the data symbol based on the OTFS system, and/or the terminal may receive the data symbol within the second guard period when receiving the data symbol based on the OTFS system.

In some embodiments, the DMRS is a first DMRS of a PUSCH and the data symbol is a first data symbol of the PUSCH, or the DMRS is a second DMRS of a PDSCH and the data symbol is a second data symbol of the PDSCH.

In some embodiments, the terminal determines a first guard period for transmitting the first DMRS of the PUSCH based on the OTFS system; determines a second guard period for transmitting the first data symbol of the PUSCH based on the OTFS system; and determines the power boosting factor for the first DMRS of the PUSCH according to the first guard period and the second guard period.

In some embodiments, the terminal determines a first guard period for transmitting the second DMRS of the PDSCH based on the OTFS system; determines a second guard period for transmitting the second data symbol of the PDSCH based on the OTFS system; and determines the power boosting factor for the second DMRS of the PDSCH according to the first guard period and the second guard period.

In some embodiments, determining by the terminal, the power boosting factor of the DMRS according to the first guard period and the second guard period includes: determining the power boosting factor of the DMRS according to a fifth quantity of total REs in the first guard period and the second guard period, and a sixth quantity of REs occupied by the DMRS; or determining the power boosting factor of the DMRS according to a seventh quantity of REs in the first guard period and the second guard period for collecting multipath energy of the DMRS and the data symbol, and a sixth quantity of REs occupied by the DMRS; or determining the power boosting factor of the DMRS according to an eighth quantity of REs in the first guard period and the second guard period with the same delay as the DMRS, and a sixth quantity of REs occupied by the DMRS.

In embodiments of the present disclosure, determining by the terminal, the first guard period for transmitting the DMRS based on the OTFS system, determining by the terminal, the second guard period for transmitting the data symbol based on the OTFS system, and determining by the terminal, the power boosting factor for the DMRS according to the first guard period and the second guard period, may include: determining the power boosting factor for the DMRS according to the fifth quantity of total REs in the first guard period and the second guard period, and the sixth quantity of REs occupied by the DMRS.

For example, the terminal determines the power boosting factor of the DMRS as a ratio of the fifth quantity to the sixth quantity, or a sum of the ratio of the fifth quantity to the sixth quantity and an offset value.

For example, in a case that the terminal determines the power boosting factor of the DMRS as the sum of the ratio of the fifth quantity to the sixth quantity and the offset value, the fifth quantity of total REs in the first guard period and the second guard period is 3, the sixth quantity of REs occupied by the DMRS is 1, and the offset value is 1, the power boosting factor of DMRS may be thus determined as 3/1+1=4.

In embodiments of the present disclosure, determining by the terminal, the first guard period for transmitting the DMRS based on the OTFS system, determining the second guard period for transmitting the data symbol based on the OTFS system, and determining the power boosting factor for the DMRS according to the first guard period and the second guard period, may include: determining the power boosting factor for the DMRS according to the seventh quantity of REs in the first guard period and the second guard period for collecting multipath energy of the DMRS and the data symbol, and the sixth quantity of REs occupied by the DMRS.

For example, the terminal determines the power boosting factor of the DMRS as a ratio of the seventh quantity to the sixth quantity, or a sum of the ratio of the seventh quantity to the sixth quantity and an offset value.

For example, in a case that the terminal determines the power boosting factor of the DMRS as the sum of the ratio of the seventh quantity to the sixth quantity and the offset value, the seventh quantity of REs in the first guard period and the second guard period for collecting multipath energy of the DMRS and the data symbol is 3, the sixth quantity of REs occupied by the DMRS is 1, and the offset value is 1, the power boosting factor of DMRS may be thus determined as 3/1+1=4.

In embodiments of the present disclosure, determining by the terminal, the first guard period for transmitting the DMRS based on the OTFS system, determining the second guard period for transmitting the data symbol based on the OTFS system, and determining the power boosting factor for the DMRS according to the first guard period and the second guard period, may include: determining the power boosting factor for the DMRS according to the eighth quantity of REs in the first guard period and the second guard period with the same delay as the DMRS, and the sixth quantity of REs occupied by the DMRS.

For example, the terminal determines the power boosting factor of the DMRS as a ratio of the eighth quantity to the sixth quantity, or a sum of the ratio of the eighth quantity to the sixth quantity and an offset value.

For example, in a case that the terminal determines the power boosting factor of the DMRS as the sum of the ratio of the eighth quantity to the sixth quantity and the offset value, the eighth quantity of REs in the first guard period and the second guard period with the same delay as the DMRS is 3, the sixth quantity of REs occupied by the DMRS is 1, and the offset value is 1, the power boosting factor of the DMRS may be thus determined as 3/1+1=4.

S302, the terminal determines a transmission power for transmitting first information based on an OTFS system according to the power boosting factor.

In embodiments of the disclosure, the terminal may determine the power boosting factor, in which the power boosting factor is used by the terminal to determine the transmission power for transmitting the first information based on the OTFS system.

In embodiments of the disclosure, the terminal determines the transmission power of the first information based on the OTFS system according to the power boosting factor.

In some embodiments, there is a mapping relationship between power boosting factors and transmission powers of the first information based on the OTFS system. In this case, when the terminal determines the power boosting factor, the transmission power of the first information based on the OTFS system may be determined according to the power boosting factor and the mapping relationship.

In some embodiments, the terminal determines the transmission power of the first information based on the OTFS system according to the power boosting factor and an initial transmission power, in which the transmission power of the first information based on the OTFS system is a product of the initial transmission power and the power boosting factor, or a sum of the product of the initial transmission power and the power boosting factor and an offset value.

In embodiments of the present disclosure, the terminal may determine the power boosting factor for transmitting the first information based on the OTFS system, and then determine the transmission power for transmitting the first information according the power boosting factor.

It may be understood that the terminal may transmit the first information based on the OTFS system on one or more REs, in which the transmission power of the first information may be an average power of transmitting the first information on one or more REs.

In some embodiments, the first information includes at least one of a CSI-RS, a DMRS, or a data symbol.

In embodiments of the present disclosure, the terminal may determine a power boosting factor for transmitting a CSI-RS based on an OTFS system, and then determine a transmission power for transmitting the CSI-RS according to the power boosting factor.

In embodiments of the present disclosure, the terminal may determine a power boosting factor for transmitting a DMRS based on an OTFS system, and then determine a transmission power for transmitting the DMRS according to the power boosting factor.

In some embodiments, the terminal determines a power boosting factor for transmitting a DMRS of a PDSCH based on an OTFS system, and then determines a transmission power for transmitting the DMRS of the PDSCH according to the power boosting factor.

In some embodiments, the terminal determines a power boosting factor for transmitting a DMRS of a PUSCH based on an OTFS system, and then determines a transmission power for transmitting the DMRS of the PUSCH according to the power boosting factor.

In embodiments of the present disclosure, the terminal may determine a power boosting factor for transmitting a data symbol based on the OTFS system, and then determine a transmission power for transmitting the data symbol according to the power boosting factor.

In some embodiments, the terminal determines a power boosting factor for transmitting a data symbol of a PDSCH based on the OTFS system, and then determines a transmission power for transmitting the data symbol of the PDSCH according to the power boosting factor.

In some embodiments, the terminal determines a power boosting factor for transmitting a data symbol of a PUSCH based on the OTFS system, and then determines a transmission power for transmitting the data symbol of the PUSCH according to the power boosting factor.

It needs to be noted that the above embodiments are for illustrative purposes only, and the first information may be other information besides that in the above embodiments, which is not specifically limited in the embodiments of the disclosure.

In some embodiments, determining by the terminal, the power boosting factor for transmitting the first information based on the OTFS system includes: determining a guard period for transmitting the first information based on the OTFS system; and determining the power boosting factor according to the guard period.

In embodiments of the present disclosure, the terminal may determine the guard period for transmitting the first information based on the OTFS system, and then determine the power boosting factor according to the guard period.

In some embodiments, the terminal determines the guard period for transmitting the first information based on the OTFS system based on an indication from the network device.

It may be understood that a guard period is set when transmitting the first information based on the OTFS system, the terminal may perform no uplink transmission within the guard period when sending the first information based on the OTFS system, and/or the terminal may receive the first information within the guard period when receiving the first information based on the OTFS system.

It may be understood that, in the OTFS system, due to its two-dimensional circular convolution characteristics in the DD domain, any symbol in the DD domain is extended to multiple REs in the DD domain at the receiver. Assuming the channel *h*(*τ*,*v*) includes P paths (each path may have different delays and/or Dopplers), each data symbol in the DD domain is extended to P REs in the DD domain. The delay of each path has a range of [0, τₘₐₓ], and the Doppler shift of each path has a range of [-vₘₐₓ, vₘₐₓ], in which τₘₐₓ is a maximum delay, and vₘₐₓ is a maximum Doppler shift. On the one hand, for one symbol in the DD domain, the energy that spreads onto the P paths needs to be collected to improve the reception performance of this symbol in the DD domain. On the other hand, if one symbol in the DD domain spreads to the P REs in the DD domain which are assigned to other channels, interference between channels is caused. In particular, if these channels/signals are allocated to different terminals, and one terminal cannot know scheduling information of other terminals, this makes it impossible for the terminal to effectively remove the interference from signals from other terminals.

For example, in order to eliminate the inter-symbol interference caused by the two-dimensional circular convolution characteristics in the OTFS system, a guard period may be set for transmitting the first information based on OTFS. The RE in the DD domain occupied by the guard period is not used to carry signals, or in other words, a number of symbols carried is 0.

FIG. 4 is a diagram of a guard period in the DD domain that is set to protect the first information. In FIG. 4, the first information that needs to be protected is represented by P and is located in RE(lₚ, kₚ), a grid may represent one or more REs in the DD domain, L represent a number of single-sided samples of the guard period in the delay dimension, and 2K are a number of single-sided samples of the guard period in the Doppler dimension. The guard period around the first information needs to consider two aspects. In the first aspect, for one symbol of the first information, the receiving performance is improved by collecting the energy that spreads into multipath in the guard period (see grids with a hatch-fill pattern in FIG. 4). In the second aspect, the guard period is also to prevent other signals/channels from spreading energy into the multipath (at least the stronger path, which is represented by grids without pattern filling in FIG. 4) and interference to reception of the first information. For the above second aspect, there may be other terminals that need to collect the energy of their signals/channels spreading into multipath within these guard periods (the grids without pattern filling in FIG. 4). Outside the guard period of the first information (as shown in FIG. 4, the grid filled with a crosshatched pattern), there may be transmissions of other signals/channels.

In view of the above situation, since a guard period is added around the symbol where the first information is it transmitted, the guard period may avoid interference from other signals/channels. That is, although other signals/channels have time/frequency domain offsets due to multipath effects, the setting of the guard period may prevent transmission of other signals/channels with the time/frequency domain offsets from overlapping with transmission of the first information, thus avoiding interference.

Since a guard period is added around the first information, power boosting may be performed on the first information, which improves the accuracy of channel estimation and channel measurement based on the first information.

In embodiments of the disclosure, the terminal determines the power boosting factor for transmitting the first information based on the OTFS system according to the guard period for transmitting the first information based on the OTFS system.

In some embodiments, the first information is a DMRS, and determining by the terminal, the transmission power for transmitting the first information according to the power boosting factor includes: determining a transmission power for transmitting the DMRS as a product of the power boosting factor and EPRE on each RE of a data symbol, according to a power boosting factor of the DMRS.

In embodiments of the disclosure, in a case that the first information is the DMRS, the terminal may determine, according to the power boosting factor of the DMRS transmitting the first information based on the OTFS system, that the transmission power of the DMRS based on the OTFS system is the product of the power boosting factor and the EPRE on each RE of the data symbol.

In some embodiments, in a case that the first information is a first DMRS of a PUSCH, the terminal determines, according to a power boosting factor of the first DMRS of the PUSCH, that a transmission power of the first DMRS of the PUSCH is a product of the power boosting factor and EPRE of a first data symbol of the PUSCH.

In some embodiments, in a case that the first information is a second DMRS of a PDSCH, the terminal determines, according to a power boosting factor of the second DMRS of the PDSCH, that a transmission power of the second DMRS of the PDSCH is a product of the power boosting factor and EPRE of a second data symbol of the PDSCH.

In some embodiments, the first information is a CSI-RS, and determining by the terminal, the transmission power for transmitting the first information according to the power boosting factor includes: determining a transmission power for transmitting the CSI-RS as a product of the power boosting factor and EPRE of the second information, according to a power boosting factor of the CSI-RS.

In embodiments of the disclosure, in a case that the first information is a CSI-RS, and determining by the terminal, the transmission power for transmitting the CSI-RS according to a power boosting factor for transmitting the CSI-RS based on the OTFS system may include: determining that the transmission power for transmitting the CSI-RS is a product of the power boosting factor and EPRE of second information.

In some embodiments, the second information is: an SSS in an OFDM system; or an SSS in an OTFS system; or a DMRS of a PBCH in the OTFS system; or a data portion of the PBCH in the OTFS system.

In embodiments of the disclosure, in a case that the second information is the SSS in the OFDM system, the terminal may determine that the transmission power for transmitting the CSI-RS is a product of the power boosting factor and EPRE of the SSS in the OFDM system.

In embodiments of the disclosure, in a case that the second information is the SSS in the OTFS system, the terminal may determine that the transmission power for transmitting the CSI-RS is a product of the power boosting factor and EPRE of the SSS in the OTFS system.

In embodiments of the disclosure, in a case that the second information is the DMRS of the PBCH in the OTFS system, the terminal may determine that the transmission power for transmitting the CSI-RS is a product of the power boosting factor and EPRE of the DMRS of the PBCH in the OTFS system.

In embodiments of the disclosure, in a case that the second information is the data portion of the PBCH in the OTFS system, the terminal may determine that the transmission power for transmitting the CSI-RS is a product of the power boosting factor and EPRE of the data portion of the PBCH in the OTFS system.

In some embodiments, the first information is a data symbol, and determining by the terminal, the transmission power for transmitting the first information according to the power boosting factor includes: determining a transmission power of transmitting the data symbol as a product of EPRE of the data symbol and the power boosting factor, according to a power boosting factor of the data symbol.

In embodiments of the disclosure, in a case that the first information is a data symbol, and determining by the terminal, the transmission power for transmitting the data symbol according to the power boosting factor for transmitting the data symbol based on the OTFS system may include: determining that a transmission power for transmitting the data symbol is a product of the power boosting factor and EPRE of the data symbol.

In some embodiments, the data symbol is a first data symbol of a PUSCH, or a second data symbol of a PDSCH.

In some embodiments, the first information is a data symbol and the data symbol is a first data symbol of a PUSCH, and determining by the terminal, a transmission power for transmitting the first information according to the power boosting factor includes: determining, according to a power boosting factor of the first data symbol of the PUSCH, that the transmission power for transmitting the first data symbol of PUSCH is a product of EPRE of the first data symbol of the PUSCH and the power boosting factor.

In some embodiments, the first information is a data symbol and the data symbol is a second data symbol of a PDSCH, and determining by the terminal, the transmission power for transmitting the first information according to the power boosting factor includes: determining, according to a power boosting factor of the second data symbol of the PDSCH, that a transmission power for transmitting the second data symbol of the PDSCH is a product of EPRE of the second data symbol of the PDSCH and the power boosting factor.

In embodiments of the present disclosure, the terminal determines the power boosting factor, and determines the transmission power for transmitting the first information based on the OTFS system according to the power boosting factor. Based on the determined transmission power, the first information based on the OTFS system may be transmitted, which may improve the transmission power for transmitting the first information based on the OTFS system and improve the performance of the communication system.

In some embodiments, names are not limited to those specified in the embodiments. The terms such as "information", "message", "signal", "signaling", "report", "configuration", "indication", "instruction", "command", "channel", "parameter", "domain", "field", "symbol", "symbol/code element", "codebook", "codeword", "codepoint", "bit", "data", "program", "chip", etc., may be used interchangeably.

In some embodiments, the terms such as "uplink", "physical uplink", etc. may be used interchangeably; terms such as "downlink", "physical downlink", etc. may be used interchangeably; and terms such as "side", "sidelink", "sidelink communication", "direct link", "direct communication", "direct link communication" etc. may be used interchangeably.

In some embodiments, the terms such as "PDSCH", "DL data" may be used interchangeably, and the terms such as "PUSCH", "UL data" may be used interchangeably.

In some embodiments, the terms such as "synchronization signal (SS)", "synchronization signal block (SSB)", "reference signal (RS)", "pilot", "pilot signal" may be used interchangeably.

In some embodiments, the terms such as "acquire", "obtain", "get", "receive", "transmit", "bidirectional transmission", "send and/or receive" may be used interchangeably, and they may be interpreted as receiving from another entity, obtaining from a protocol, obtaining from a high layer, obtaining via processing by itself, autonomously implementing, and other meanings.

In some embodiments, the terms such as "send", "transmit", "report", "deliver", "transmit", "bidirectional transmission", "send and/or receive" may be used interchangeably.

In some embodiments, terms such as "certain", "predetermined", "preset", "set", "indicated", "a/an", "any", "first", etc. may be used interchangeably. "Certain A", "predetermined A", "preset A", "set A", "indicated A", "a/an A", "any A", "first A" may be interpreted as A predefined in a protocol, etc., or as A obtained via setting, configuration, or indication, etc., or as a certain A, a/an A, any A, or a first A, etc., which is not limited herein.

FIG. 5 is a flowchart illustrating another information transmission method according to an embodiment of the present disclosure. As shown in FIG. 5, embodiments of the disclosure relate to an information transmission method, which includes the following steps S501-S502.

At S501, a network device determines a power boosting factor.

In some embodiments, the network device sends indication information to a terminal, in which the indication information indicates the power boosting factor.

In embodiments of the disclosure, in a case that the network device determines a power boosting factor for transmitting first information based on an OTFE system, the network device may send indication information indicating the power boosting factor to the terminal.

For example, in a case that the network device sends indication information to the terminal, in which the indication information indicates that the power boosting factor for transmitting the first information based on the OTFS system is 4, the terminal may determine that the power boosting factor is 4.

In some embodiments, sending by the network device, indication information to the terminal includes: sending a broadcast message to the terminal, in which the broadcast message includes the indication information; sending an RRC signaling to the terminal, in which the RRC signaling includes the indication information; or sending DCI to the terminal, in which the DCI includes the indication information.

In embodiments of the disclosure, the network device sends a broadcast message to the terminal, in which the broadcast message includes indication information and the indication information indicates the power boosting factor for transmitting the first information based on the OTFS system. Therefore, the terminal may determine the power boosting factor for transmitting the first information based on the OTFS system.

In embodiments of the disclosure, the network device sends an RRC signaling to the terminal, in which the RRC signaling includes indication information and the indication information indicates the power boosting factor for transmitting the first information based on the OTFS system. Therefore, the terminal may determine the power boosting factor for transmitting the first information based on the OTFS system.

In embodiments of the disclosure, the network device sends DCI to the terminal, in which the DCI includes indication information and the indication information indicates the power boosting factor for transmitting first information based on the OTFS system. Therefore, the terminal may determine the power boosting factor for transmitting the first information based on the OTFS system.

In some embodiments, the network device determines a guard period for transmitting the first information based on the OTFS system based on a protocol agreement.

In some embodiments, determining by the network device, the power boosting factor according to the guard period includes: determining the power boosting factor according to a first quantity of REs in the guard period and a second quantity of REs occupied by the first information; or determining the power boosting factor according to a third quantity of REs in the guard period for collecting multipath energy of the first information and a second quantity of REs occupied by the first information; or determining the power boosting factor according to a fourth quantity of REs in the guard period with the same delay as the first information and a second quantity of REs occupied by the first information.

In embodiments of the present disclosure, in a case that the network device determines the guard period for transmitting the first information based on the OTFS system, the network device may determine the power boosting factor according to the first quantity of REs in the guard period and the second quantity of REs occupied by the first information.

For example, the network device determines the power boosting factor as a ratio of the first quantity to the second quantity, according to the first quantity of REs in the guard period and the second quantity of REs occupied by the first information.

For example, the network device determines the power boosting factor as a sum of the ratio of the first quantity to the second quantity of REs occupied by the first information and an offset value, according to the first quantity of REs in the guard period and the second quantity of REs occupied by the first information.

For example, in a case that the network device determines, according to the first quantity of REs in the guard period and the second quantity of REs occupied by the first information, the power boosting factor as the sum of the ratio of the first quantity to the second quantity of REs occupied by the first information and the offset value, the first quantity of REs in the guard period is 5, the second quantity of REs occupied by the first information is 1, and the offset value is 1, the power boosting factor may be thus determined as 5/1+1=6.

It needs to be noted that the above example is only for illustration. Other methods may be used to determine the power boosting factor according to the guard period, and the offset value may also be other values, which are not limited specifically in the embodiments of the disclosure.

In embodiments of the present disclosure, in a case that the network device determines the guard period for transmitting the first information based on the OTFS system, the network device may determine the power boosting factor according to the third quantity of REs in the guard period for collecting multipath energy of the first information and the second quantity of REs occupied by the first information.

For example, the network device determines the power boosting factor as a ratio of the third quantity to the second quantity, or determines the power boosting factor as a sum of the ratio of the third quantity to the second quantity and an offset value.

For example, in a case that the network device determines the power boosting factor as the sum of the ratio of the third quantity to the second quantity and the offset value, the third quantity of REs in the guard period for collecting multipath energy of the first information is 3, the second quantity of REs occupied by the first information is 1, and the offset value is 1, the power boosting factor may be thus determined as 3/1+1=4.

It needs to be noted that the above example is only for illustration. Other methods may be used to determine the power boosting factor according to the guard period, and the offset value may also be other values, which are not limited specifically in the embodiments of the disclosure.

In embodiments of the present disclosure, in a case that the network device determines the guard period for transmitting the first information based on the OTFS system, the network device may determine the power boosting factor according to the fourth quantity of REs in the guard period with the same delay as the first information and the second quantity of REs occupied by the first information.

For example, the network device determines the power boosting factor as a ratio of the fourth quantity to the second quantity, or determines the power boosting factor as a sum of the ratio of the fourth quantity to the second quantity and an offset value.

For example, in a case that the network device determines the power boosting factor as the sum of the ratio of the fourth quantity to the second quantity and the offset value, the fourth quantity of REs in the guard period with the same delay as the first information is 3, the second quantity of REs occupied by the first information is 1, and the offset value is 1, the power boosting factor may be thus determined as 3/1 + 1 = 4.

It needs to be noted that the above example is only for illustration. Other methods may be used to determine the power boosting factor according to the guard period, and the offset value may also be other values, which are not limited specifically in the embodiments of the disclosure.

In some embodiments, the first information includes at least one of a CSI-RS, a DMRS, or a data symbol.

In some embodiments, the first information is a DMRS, and determining by the network device, the power boosting factor for transmitting the first information based on the OTFS system includes: determining a first guard period for transmitting the DMRS based on the OTFS system; determining a second guard period for transmitting a data symbol based on the OTFS system; and determining a power boosting factor of the DMRS according to the first guard period and the second guard period.

In embodiments of the present disclosure, in a case that the first information is a DMRS, the network device may determine the first guard period for transmitting the DMRS based on the OTFS system and the second guard period for transmitting the data symbol based on the OTFS system, and then determine the power boosting factor of the DMRS according to the first guard period and the second guard period.

It may be understood that, in a case that the network device determines the first guard period for transmitting the DMRS based on the OTFS system, the first guard period may be set when transmitting the DMRS based on the OTFS system, and the network device may perform no downlink transmission within the first guard period when sending the DMRS based on the OTFS system, and/or the network device may receive the DMRS within the first guard period when receiving the DMRS based on the OTFS system.

It may be understood that, in a case that the network device determines the second guard period for transmitting the data symbol based on the OTFS system, the second guard period may be set when transmitting the data symbol based on the OTFS system, and the network device may perform no downlink transmission within the second guard period when sending the data symbol based on the OTFS system, and/or the network device may receive the data symbol within the second guard period when receiving the data symbol based on the OTFS system.

In some embodiments, the DMRS is a first DMRS of a PUSCH and the data symbol is a first data symbol of the PUSCH, or the DMRS is a second DMRS of a PDSCH and the data symbol is a second data symbol of the PDSCH.

In some embodiments, the network device determines a first guard period for transmitting the first DMRS of the PUSCH based on the OTFS system; determines a second guard period for transmitting the first data symbol of the PUSCH based on the OTFS system; and determines the power boosting factor for the first DMRS of the PUSCH according to the first guard period and the second guard period.

In some embodiments, the network device determines a first guard period for transmitting the second DMRS of the PDSCH based on the OTFS system; determines a second guard period for transmitting the second data symbol of the PDSCH based on the OTFS system; and determines the power boosting factor for the second DMRS of the PDSCH according to the first guard period and the second guard period.

In some embodiments, determining by the network device, the power boosting factor of the DMRS according to the first guard period and the second guard period includes: determining the power boosting factor of the DMRS according to a fifth quantity of total REs in the first guard period and the second guard period, and a sixth quantity of REs occupied by the DMRS; or determining the power boosting factor of the DMRS according to a seventh quantity of REs in the first guard period and the second guard period for collecting multipath energy of the DMRS and the data symbol, and a sixth quantity of REs occupied by the DMRS; or determining the power boosting factor of the DMRS according to an eighth quantity of REs in the first guard period and the second guard period with the same delay as the DMRS, and a sixth quantity of REs occupied by the DMRS.

In embodiments of the present disclosure, determining by the network device, the first guard period for transmitting the DMRS based on the OTFS system, determining by the terminal, the second guard period for transmitting the data symbol based on the OTFS system, and determining by the terminal, the power boosting factor for the DMRS according to the first guard period and the second guard period, may include: determining the power boosting factor for the DMRS according to the fifth quantity of total REs in the first guard period and the second guard period, and the sixth quantity of REs occupied by the DMRS.

For example, the network device determines the power boosting factor of the DMRS as a ratio of the fifth quantity to the sixth quantity, or a sum of the ratio of the fifth quantity to the sixth quantity and an offset value.

For example, in a case that the network device determines the power boosting factor of the DMRS as the sum of the ratio of the fifth quantity to the sixth quantity and the offset value, the fifth quantity of total REs in the first guard period and the second guard period is 3, the sixth quantity of REs occupied by the DMRS is 1, and the offset value is 1, the power boosting factor of DMRS may be thus determined as 3/1+1=4.

In embodiments of the present disclosure, determining by the network device, the first guard period for transmitting the DMRS based on the OTFS system, determining the second guard period for transmitting the data symbol based on the OTFS system, and determining the power boosting factor for the DMRS according to the first guard period and the second guard period, may include: determining the power boosting factor for the DMRS according to the seventh quantity of REs in the first guard period and the second guard period for collecting multipath energy of the DMRS and the data symbol, and the sixth quantity of REs occupied by the DMRS.

For example, the network device determines the power boosting factor of the DMRS as a ratio of the seventh quantity to the sixth quantity, or a sum of the ratio of the seventh quantity to the sixth quantity and an offset value.

For example, in a case that the network device determines the power boosting factor of the DMRS as the sum of the ratio of the seventh quantity to the sixth quantity and the offset value, the seventh quantity of REs in the first guard period and the second guard period for collecting multipath energy of the DMRS and the data symbol is 3, the sixth quantity of REs occupied by the DMRS is 1, and the offset value is 1, the power boosting factor of DMRS may be thus determined as 3/1+1=4.

In embodiments of the present disclosure, determining by the network device, the first guard period for transmitting the DMRS based on the OTFS system, determining the second guard period for transmitting the data symbol based on the OTFS system, and determining the power boosting factor for the DMRS according to the first guard period and the second guard period, may include: determining the power boosting factor for the DMRS according to the eighth quantity of REs in the first guard period and the second guard period with the same delay as the DMRS, and the sixth quantity of REs occupied by the DMRS.

For example, the network device determines the power boosting factor of the DMRS as a ratio of the eighth quantity to the sixth quantity, or a sum of the ratio of the eighth quantity to the sixth quantity and an offset value.

For example, in a case that the network device determines the power boosting factor of the DMRS as the sum of the ratio of the eighth quantity to the sixth quantity and the offset value, the eighth quantity of REs in the first guard period and the second guard period with the same delay as the DMRS is 3, the sixth quantity of REs occupied by the DMRS is 1, and the offset value is 1, the power boosting factor of the DMRS may be thus determined as 3/1+1=4.

S502, the network device determines a transmission power for transmitting first information based on an OTFS system according to the power boosting factor.

In embodiments of the disclosure, the network device may determine the power boosting factor, in which the power boosting factor is used by the network device to determine the transmission power for transmitting the first information based on the OTFS system.

In embodiments of the disclosure, the network device determines the transmission power of the first information based on the OTFS system according to the power boosting factor.

In some embodiments, there is a mapping relationship between power boosting factors and transmission powers of the first information based on the OTFS system. In this case, when the network device determines the power boosting factor, the transmission power of the first information based on the OTFS system may be determined according to the power boosting factor and the mapping relationship.

In some embodiments, the network device determines the transmission power of the first information based on the OTFS system according to the power boosting factor and an initial transmission power, in which the transmission power of the first information based on the OTFS system is a product of the initial transmission power and the power boosting factor, or a sum of the product of the initial transmission power and the power boosting factor and an offset value.

In embodiments of the present disclosure, the network device may determine the power boosting factor for transmitting the first information based on the OTFS system, and then determine the transmission power for transmitting the first information according the power boosting factor.

It may be understood that the network device may transmit the first information based on the OTFS system on one or more REs, in which the transmission power of the first information may be an average power of transmitting the first information on one or more REs.

In some embodiments, the first information includes at least one of a CSI-RS, a DMRS, or a data symbol.

In embodiments of the present disclosure, the network device may determine a power boosting factor for transmitting a CSI-RS based on an OTFS system, and then determine a transmission power for transmitting the CSI-RS according to the power boosting factor.

In embodiments of the present disclosure, the network device may determine a power boosting factor for transmitting a DMRS based on an OTFS system, and then determine a transmission power for transmitting the DMRS according to the power boosting factor.

In some embodiments, the network device determines a power boosting factor for transmitting a DMRS of a PDSCH based on an OTFS system, and then determines a transmission power for transmitting the DMRS of the PDSCH according to the power boosting factor.

In some embodiments, the network device determines a power boosting factor for transmitting a DMRS of a PUSCH based on an OTFS system, and then determines a transmission power for transmitting the DMRS of the PUSCH according to the power boosting factor.

In embodiments of the present disclosure, the network device may determine a power boosting factor for transmitting a data symbol based on the OTFS system, and then determine a transmission power for transmitting the data symbol according to the power boosting factor.

In some embodiments, the network device determines a power boosting factor for transmitting a data symbol of a PDSCH based on the OTFS system, and then determines a transmission power for transmitting the data symbol of the PDSCH according to the power boosting factor.

In some embodiments, the network device determines a power boosting factor for transmitting a data symbol of a PUSCH based on the OTFS system, and then determines a transmission power for transmitting the data symbol of the PUSCH according to the power boosting factor.

It needs to be noted that the above embodiments are for illustrative purposes only, and the first information may be other information besides that in the above embodiments, which is not specifically limited in the embodiments of the disclosure.

In some embodiments, determining by the network device, the power boosting factor for transmitting the first information based on the OTFS system includes: determining a guard period for transmitting the first information based on the OTFS system; and determining the power boosting factor according to the guard period.

In embodiments of the present disclosure, the network device may determine the guard period for transmitting the first information based on the OTFS system, and then determine the power boosting factor according to the guard period.

It may be understood that a guard period is set when transmitting the first information based on the OTFS system, the network device may perform no downlink transmission within the guard period when sending the first information based on the OTFS system, and/or the network device may receive the first information within the guard period when receiving the first information based on the OTFS system.

It may be understood that, in the OTFS system, due to its two-dimensional circular convolution characteristics in the DD domain, any symbol in the DD domain is extended to multiple REs in the DD domain at the receiver. Assuming the channel *h*(*τ*,*v*) includes P paths (each path may have different delays and/or Dopplers), each data symbol in the DD domain is extended to P REs in the DD domain. The delay of each path has a range of [0, τₘₐₓ], and the Doppler shift of each path has a range of [-vₘₐₓ, vₘₐₓ], in which τₘₐₓ is a maximum delay, and vₘₐₓ is a maximum Doppler shift. On the one hand, for one symbol in the DD domain, the energy that spreads onto the P paths needs to be collected to improve the reception performance of this symbol in the DD domain. On the other hand, if one symbol in the DD domain spreads to the P REs in the DD domain which are assigned to other channels, interference between channels is caused. In particular, if these channels/signals are allocated to different terminals, and one terminal cannot know scheduling information of other terminals, this makes it impossible for the terminal to effectively remove the interference from signals from other terminals.

For example, in order to eliminate the inter-symbol interference caused by the two-dimensional circular convolution characteristics in the OTFS system, a guard period may be set for transmitting the first information based on OTFS. The RE in the DD domain occupied by the guard period is not used to carry signals, or in other words, a number of symbols carried is 0. FIG. 4 is a diagram of a guard period in the DD domain that is set to protect the first information. In FIG. 4, the first information that needs to be protected is represented by P and is located in RE(lₚ, kₚ), a grid may represent one or more REs in the DD domain, L represent a number of single-sided samples of the guard period in the delay dimension, and 2K are a number of single-sided samples of the guard period in the Doppler dimension. The guard period around the first information needs to consider two aspects. In the first aspect, for one symbol of the first information, the receiving performance is improved by collecting the energy that spreads into multipath in the guard period (see grids with a hatch-fill pattern in FIG. 4). In the second aspect, the guard period is also to prevent other signals/channels from spreading energy into the multipath (at least the stronger path, which is represented by grids without pattern filling in FIG. 4) and interference to reception of the first information. For the above second aspect, there may be other terminals that need to collect the energy of their signals/channels spreading into the multipath within these guard periods (see grids without pattern filling in FIG. 4). Outside the guard period of the first information (as shown in FIG. 4, grids filled with a crosshatched pattern), there may be transmissions of other signals/channels.

In view of the above situation, since a guard period is added around the symbol where the first information is it transmitted, the guard period may avoid interference from other signals/channels. That is, although other signals/channels have time/frequency domain offsets due to multipath effects, the setting of the guard period may prevent transmission of other signals/channels with the time/frequency domain offsets from overlapping with transmission of the first information, thus avoiding interference.

Since a guard period is added around the first information, power boosting may be performed on the first information, which improves the accuracy of channel estimation and channel measurement based on the first information.

In embodiments of the disclosure, the network device determines the power boosting factor for transmitting the first information based on the OTFS system according to the guard period for transmitting the first information based on the OTFS system.

In some embodiments, the first information is a DMRS, and determining by the network device, the transmission power for transmitting the first information according to the power boosting factor includes: determining a transmission power for transmitting the DMRS as a product of the power boosting factor and EPRE on each RE of a data symbol, according to a power boosting factor of the DMRS.

In embodiments of the disclosure, in a case that the first information is the DMRS, the network device may determine, according to the power boosting factor of the DMRS transmitting the first information based on the OTFS system, that the transmission power of the DMRS based on the OTFS system is the product of the power boosting factor and the EPRE on each RE of the data symbol.

In some embodiments, in a case that the first information is a first DMRS of a PUSCH, the network device determines, according to a power boosting factor of the first DMRS of the PUSCH, that a transmission power of the first DMRS of the PUSCH is a product of the power boosting factor and EPRE of a first data symbol of the PUSCH.

In some embodiments, in a case that the first information is a second DMRS of a PDSCH, the network device determines, according to a power boosting factor of the second DMRS of the PDSCH, that a transmission power of the second DMRS of the PDSCH is a product of the power boosting factor and EPRE of a second data symbol of the PDSCH.

In some embodiments, the first information is a CSI-RS, and determining by the network device, the transmission power for transmitting the first information according to the power boosting factor includes: determining a transmission power for transmitting the CSI-RS as a product of the power boosting factor and EPRE of the second information, according to a power boosting factor of the CSI-RS.

In embodiments of the disclosure, in a case that the first information is a CSI-RS, and determining by the network device, the transmission power for transmitting the CSI-RS according to a power boosting factor for transmitting the CSI-RS based on the OTFS system may include: determining that the transmission power for transmitting the CSI-RS is a product of the power boosting factor and EPRE of second information.

In some embodiments, the second information is: an SSS in an OFDM system; or an SSS in an OTFS system; or a DMRS of a PBCH in the OTFS system; or a data portion of the PBCH in the OTFS system.

In embodiments of the disclosure, in a case that the second information is the SSS in the OFDM system, the network device may determine that the transmission power for transmitting the CSI-RS is a product of the power boosting factor and EPRE of the SSS in the OFDM system.

In embodiments of the disclosure, in a case that the second information is the SSS in the OTFS system, the network device may determine that the transmission power for transmitting the CSI-RS is a product of the power boosting factor and EPRE of the SSS in the OTFS system.

In embodiments of the disclosure, in a case that the second information is the DMRS of the PBCH in the OTFS system, the network device may determine that the transmission power for transmitting the CSI-RS is a product of the power boosting factor and EPRE of the DMRS of the PBCH in the OTFS system.

In embodiments of the disclosure, in a case that the second information is the data portion of the PBCH in the OTFS system, the network device may determine that the transmission power for transmitting the CSI-RS is a product of the power boosting factor and EPRE of the data portion of the PBCH in the OTFS system.

In some embodiments, the first information is a data symbol, and determining by the network device, the transmission power for transmitting the first information according to the power boosting factor includes: determining a transmission power of transmitting the data symbol as a product of EPRE of the data symbol and the power boosting factor, according to a power boosting factor of the data symbol.

In embodiments of the disclosure, in a case that the first information is a data symbol, and determining by the network device, the transmission power for transmitting the data symbol according to the power boosting factor for transmitting the data symbol based on the OTFS system may include: determining that a transmission power for transmitting the data symbol is a product of the power boosting factor and EPRE of the data symbol.

In some embodiments, the data symbol is a first data symbol of a PUSCH, or a second data symbol of a PDSCH.

In some embodiments, the first information is a data symbol and the data symbol is a first data symbol of a PUSCH, and determining by the network device, a transmission power for transmitting the first information according to the power boosting factor includes: determining, according to a power boosting factor of the first data symbol of the PUSCH, that the transmission power for transmitting the first data symbol of PUSCH is a product of EPRE of the first data symbol of the PUSCH and the power boosting factor.

In some embodiments, the first information is a data symbol and the data symbol is a second data symbol of a PDSCH, and determining by the network device, the transmission power for transmitting the first information according to the power boosting factor includes: determining, according to a power boosting factor of the second data symbol of the PDSCH, that a transmission power for transmitting the second data symbol of the PDSCH is a product of EPRE of the second data symbol of the PDSCH and the power boosting factor.

In embodiments of the present disclosure, in a case that the network device determines the transmission power for transmitting the first information based on the OTFS system, the first information based on the OTFS system may be transmitted based on the determined transmission power, which may improve the transmission power for transmitting the first information based on the OTFS system and improve the performance of the communication system.

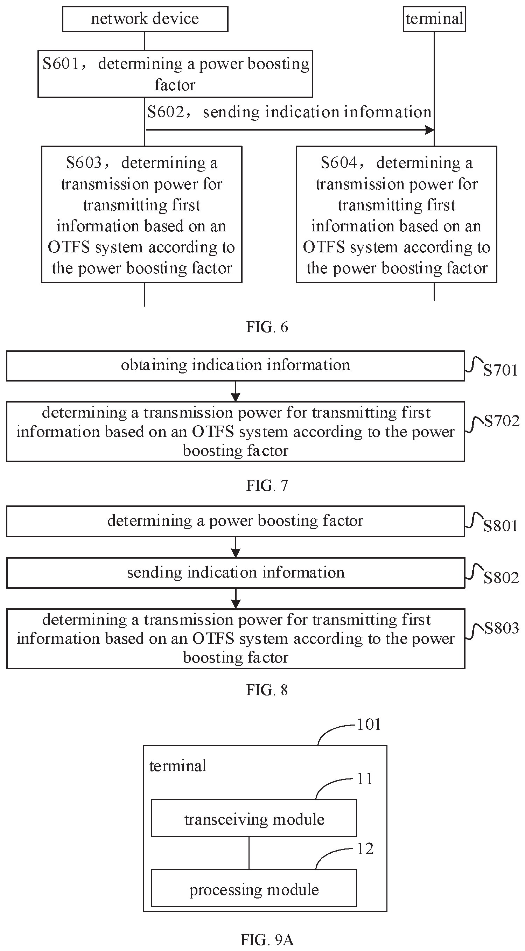

FIG. 6 is an interaction diagram of an information transmission method according to an embodiment of the present disclosure. As shown in FIG. 6, embodiments of the disclosure relate to an information transmission method, which includes the following steps S601-S604.

At S601, a network device determines a power boosting factor.

For optional implementations of S601, reference may be made to those of S501 in FIG. 5 and other related parts in the embodiments involved in FIG. 5, which will not be repeated here.

In some embodiments, determining by the network device, a power boosting factor for transmitting first information based on an OTFS system includes: determining a guard period for transmitting the first information based on the OTFS system; and determining the power boosting factor according to the guard period.

In some embodiments, determining by the network device, the power boosting factor according to the guard period includes: determining the power boosting factor according to a first quantity of REs in the guard period and a second quantity of REs occupied by the first information; or determining the power boosting factor according to a third quantity of REs in the guard period for collecting multipath energy of the first information and a second quantity of REs occupied by the first information; or determining the power boosting factor according to a fourth quantity of REs in the guard period with the same delay as the first information and a second quantity of REs occupied by the first information.

In some embodiments, the first information includes at least one of CSI-RS, DMRS, and data symbols.

In some embodiments, the first information is a DMRS, and determining by the network device, the power boosting factor for transmitting the first information based on the OTFS system includes: determining a first guard period for transmitting the DMRS based on the OTFS system; determining a second guard period for transmitting a data symbol based on the OTFS system; and determining a power boosting factor of the DMRS according to the first guard period and the second guard period.

In some embodiments, determining by the network device, the power boosting factor of the DMRS according to the first guard period and the second guard period includes: determining the power boosting factor of the DMRS according to a fifth quantity of total REs in the first guard period and the second guard period, and a sixth quantity of REs occupied by the DMRS; or determining the power boosting factor of the DMRS according to a seventh quantity of REs in the first guard period and the second guard period for collecting multipath energy of the DMRS and the data symbol, and a sixth quantity of REs occupied by the DMRS; or determining the power boosting factor of the DMRS according to an eighth quantity of REs in the first guard period and the second guard period with the same delay as the DMRS, and a sixth quantity of REs occupied by the DMRS.

In some embodiments, the first information is the DMRS, and determining by the network device, the transmission power for transmitting the first information according to the power boosting factor includes: determining a transmission power for transmitting the DMRS as a product of the power boosting factor and EPRE of a data symbol, according to a power boosting factor of the DMRS.

In some embodiments, the DMRS is a first DMRS of a PUSCH, and the data symbol is a first data symbol of the PUSCH, or the DMRS is a second DMRS of a PDSCH, and the data symbol is a second data symbol of the PDSCH.

In some embodiments, the first information is a CSI-RS, and determining by the network device, the transmission power for transmitting the first information based on the OTFS system according to the power boosting factor includes: determining a transmission power for transmitting the CSI-RS as a product of the power boosting factor and EPRE of second information, according to a power boosting factor of the CSI-RS.

In some embodiments, the second information is: an SSS in an OFDM system; an SSS in the OTFS system; a DMRS of a PBCH in the OTFS system; or a data portion of the PBCH in the OTFS system.

In some embodiments, the first information is a data symbol, and determining by the network device, the transmission power for transmitting the first information based on the OTFS system according to the power boosting factor includes: determining a transmission power for transmitting the data symbol as a product of EPRE of the data symbol and the power boosting factor, according to a power boosting factor of the data symbol.

In some embodiments, the data symbol is a first data symbol of a PUSCH or a second data symbol of a PDSCH.

At S602, the network device sends indication information to a terminal.

The indication information indicates the power boosting factor.

In some embodiments, sending by the network device, indication information to the terminal includes: sending a broadcast message to the terminal, in which the broadcast message includes the indication information; sending an RRC signaling to the terminal, in which the RRC signaling includes the indication information; or sending DCI to the terminal, in which the DCI includes the indication information.

At S603, the network device determines a transmission power for transmitting first information based on an OTFS system according to the power boosting factor.

For optional implementations of S603, reference may be made to those of S502 in FIG. 5 and other related parts in the embodiments involved in FIG. 5, which will not be repeated here.

At S604, the terminal determines a transmission power for transmitting the first information based on an OTFS system according to the power boosting factor.

For optional implementations of S604, reference may be made to those of S302 in FIG. 3 and other related parts in the embodiments involved in FIG. 3, which will not be repeated here.

The communication methods involved in the embodiments of the disclosure may include at least one of S601 to S604. For example, S601 may be implemented as an independent embodiment, S602 may be implemented as an independent embodiment, S603 may be implemented as an independent embodiment, S604 may be implemented as an independent embodiment, S601+S603 may be implemented as an independent embodiment, and S601+S602+S604 may be implemented as an independent embodiment, which is not limited herein.

In some embodiments, S603 and S604 may be executed in an exchanged order or simultaneously.

In some embodiments, reference may be made to other optional implementations described before or after the specification corresponding to FIG. 2.

FIG. 7 is a flowchart illustrating another information transmission method according to an embodiment of the present disclosure. As shown in FIG. 7, embodiments of the disclosure relate to an information transmission method. The method is performed by a terminal and includes the following steps S701-S702.

At S701, indication information is obtained.

For optional implementations of S701, reference may be made to those of S602 in FIG. 6 and other related parts in the embodiments involved in FIG. 6, which will not be repeated here.

In some embodiments, the terminal receives indication information sent by a network device or other entities/devices, which is not limited herein.

In some embodiments, the terminal obtains indication information defined by a protocol.

In some embodiments, the terminal obtains indication information from one or more upper layers.

In some embodiments, the terminal obtains indication information by information processing.

In some embodiments, S701 is omitted, and the terminal autonomously implements the function indicated by the indication information, or the above function is omitted or set by default.

In some embodiments, the indication information indicates the power boosting factor.

At S702, a transmission power for transmitting first information based on an OTFS system is determined according to the power boosting factor.

For optional implementations of S702, reference may be made to those of S302 in FIG. 3 and other related parts in the embodiments involved in FIG. 3, which will not be repeated here.

The communication methods involved in the embodiments of the disclosure may include at least one of S701 to S702. For example, S701 may be implemented as an independent embodiment, and S702 may be implemented as an independent embodiment, which is not limited herein.

In some embodiments, S701 is optional, and one or more of these steps may be omitted or substituted in different embodiments.

FIG. 8 is a flowchart illustrating an information transmission method according to an embodiment of the present disclosure. As shown in FIG. 8, embodiments of the disclosure relate to an information transmission method. The method is performed by a network device and includes the following steps at S801-S803.

At S801, a power boosting factor is determined.

For optional implementations of S801, reference may be made to those of S501 in FIG. 5 and other related parts in the embodiments involved in FIG. 5, which will not be repeated here.

At S802, indication information is sent.

For optional implementations of S802, reference may be made to those of S602 in FIG. 6 and other related parts in the embodiments involved in FIG. 6, which will not be repeated here.

In some embodiments, the network device sends indication information to the terminal or other entities/devices, which is not limited herein.

Optionally, the indication information is used by the terminal to determine a transmission power for transmitting first information according to the power boosting factor. For optional implementations, reference may be made to those of S604 in FIG. 6 and other related parts in the embodiments involved in FIG. 6, which will not be repeated here.

In some embodiments, the indication information indicates the power boosting factor.

At S803, a transmission power for transmitting first information based on an OTFS system is determined according to the power boosting factor.

For optional implementations of S803, reference may be made to those of S502 in FIG. 5 and other related parts in the embodiments involved in FIG. 5, which will not be repeated here.

The communication methods involved in the embodiments of the disclosure may include at least one of S801 to S803. For example, S801 may be implemented as an independent embodiment, S802 may be implemented as an independent embodiment, and S803 may be implemented as an independent embodiment, which is not limited herein.

In some embodiments, S803 is optional, and one or more of these steps may be omitted or substituted in different embodiments.

In some embodiments, S802 is optional, and one or more of these steps may be omitted or substituted in different embodiments.

In some embodiments, due to two-dimensional circular convolution characteristics of OTFS in the DD domain, any symbol in the DD domain is extended to multiple REs in the DD domain. For example, assuming the channel h(r,v) includes P paths (each path may have different delays and/or Dopplers), each data symbol in the DD domain is extended to P REs in the DD domain. The delay of each path has a range of [0, τₘₐₓ], and the Doppler shift of each path has a range of [-vₘₐₓ, vₘₐₓ], in which τₘₐₓ is a maximum delay, and vₘₐₓ is a maximum Doppler shift. On the one hand, for one symbol in the DD domain, the energy that spreads onto the P paths needs to be collected to improve the reception performance of this symbol in the DD domain. On the other hand, if one symbol in the DD domain spreads to the P REs in the DD domain which are assigned to other channels, interference between channels is caused. In particular, if these channels/signals are allocated to different terminals, and one terminal cannot know scheduling information of other terminals, this makes it impossible for the terminal to effectively remove the interference from signals from other terminals.

In order to eliminate the effects of the two-dimensional circular convolution characteristics, a guard period may be inserted between different channels/signals. The RE in the DD domain occupied by the guard period is not used to carry signals, or in other words, a number of symbols carried is 0. FIG. 4 is a diagram of a guard period in the DD domain. In FIG. 4, a channel/signal that needs protection is represented by P and is located at RE(lₚ, kₚ), a grid may represent one or more REs in the DD domain, L represent a number of single-sided samples of the guard period in the delay dimension, and 2K are a number of single-sided samples of the guard period in the Doppler dimension. The guard period around the RS needs to consider two aspects. In the first aspect, for one symbol of the RS, the receiving performance is improved by collecting the energy that spreads into multipath in the guard period (see grids with a hatch-fill pattern in FIG. 4). In the second aspect, the guard period is also to prevent other signals/channels from spreading to energy into the multipath (at least the stronger path, which is represented by grids without pattern filling in FIG. 4) and interference to reception of the first information. For the above second aspect, there may be other terminals that need to collect the energy of their signals/channels spreading into the multipath within these guard periods (see grids without pattern filling in FIG. 4). Outside the guard period of the first information (as shown in FIG. 4, grids filled with a crosshatched pattern), there may be transmissions of other signals/channels.

In view of the above situation, since a guard period is added around the symbol where the first information is it transmitted, the guard period may avoid interference from other signals/channels. That is, although other signals/channels have time/frequency domain offsets due to multipath effects, the setting of the guard period may prevent transmission of other signals/channels with the time/frequency domain offsets from overlapping with transmission of the first information, thus avoiding interference.

Since a guard period is added around the RS, power boosting may be performed on the RS, which improves the accuracy of channel estimation and channel measurement based on the RS. If a guard period is reserved around data symbols on the PDSCH and the PUSCH, power boosting of data RE(s) of the PDSCH and the PUSCH may be increased, which improves the transmission performance of the PDSCH/PUSCH. If guard periods are added around data symbols and DMRS on the PDSCH/PUSCH, the effects of both guard periods may be considered for power boosting of the DMRS on the PDSCH/PUSCH.

In some embodiments, power boosting of the DMRS may be increased accordingly since a guard period is added to the DMRS on the PDSCH/PUSCH. The average power (EPRE) of the DMRS RE on the PDSCH/PUSCH may be increased by X times to the EPRE of data symbols on the PDSCH/PUSCH, where X is a power boosting factor. The guard period may be determined based on the maximum delay τₘₐₓ and the maximum Doppler frequency shift vₘₐₓ, where τₘₐₓ corresponds to L samples in the delay dimension and vₘₐₓ corresponds to K samples in the Doppler dimension. In practice, the guard period needs to be increased when considering the effects of fractional Doppler shift and/or delay.

In a possible implementation, the power boosting factor X is calculated according to a total number A of REs in the guard period of the DMRS and a number B of REs occupied by the DMRS. For example, X = A/B + 1. In FIG. 2, assuming that the DMRS occupies one RE in the DD domain for transmission, and its guard period occupies (2L + 1)(4K + 1) - 1 REs in total, then X = (2L + 1)(4K + 1).

In another possible implementation, the power boosting factor X is calculated according to a number Aᵤ of REs in the guard period of the DMRS for collecting multipath energy of the DMRS and a number B of REs occupied by the DMRS. For example, X = Aᵤ/B + 1. In FIG. 2, assuming that the DMRS occupies one RE in the DD domain for transmission, the REs marked on the grids may be used for collecting multipath energy, and the total number of REs is (L + 1)(2K + 1) - 1, and X = (L + 1)(2K + 1). Using this method, assuming that assuming that the DMRS occupies one RE in the DD domain for transmission, the number of REs for collecting the multipath energy of the DMRS is approximately equal to 1/4 of the total number of REs for the guard period.

In another possible implementation, the power boosting factor X is calculated according to a number A_{K} of REs in the guard period of the DMRS with the same delay as the DMRS and a number B of REs occupied by the DMRS. For example, X = A_{K}/B + 1. In FIG. 2, assuming that the DMRS occupies one RE in the DD domain for transmission, and a number of REs with the same delay as the DMRS is 4K, then X = 4K + 1. Alternatively, if only the RE quantity with the same as the delay of the DMRS for collecting the multipath energy of the DMRS is considered, then X = 2K + 1.

In another possible implementation, the power boosting factor X may be configured in broadcast information or an RRC signaling, or dynamically indicated in DCI.

In some embodiments, power boosting of a CSI-RS may be increased accordingly since a guard period is added to the CSI-RS. CSI-RS EPRE may be increased to X times EPRE of a reference channel/signal, where X is the power boosting factor. The reference channel may mean an SSS transmitted in the OFDM system, an SSS transmitted in the OTFS system, a DMRS of a PBCH transmitted in the OTFS system, or a data portion of the PBCH transmitted in the OTFS system.

In a possible implementation, the power boosting factor X is calculated according to a total number A of REs in the guard period of the CSI-RS and a number B of REs occupied by the CSI-RS. For example, X = A/B + 1. In FIG. 2, assuming that the CSI-RS occupies one RE in the DD domain for transmission, and its guard period occupies (2L + 1)(4K + 1) - 1 REs in total, then X = (2L + 1)(4K + 1).

In another possible implementation, the power boosting factor X is calculated according to a number Aᵤ of REs in the guard period of the CSI-RS for collecting multipath energy of the CSI-RS and a number B of REs occupied by the CSI-RS. For example, X = Aᵤ/B + 1. In FIG. 2, assuming that the CSI-RS occupies one RE in the DD domain for transmission, the REs marked on the grids may be used for collecting multipath energy, and the total number of REs is (L + 1)(2K + 1) - 1, and X = (L + 1)(2K + 1). Using this method, assuming that assuming that the CSI-RS occupies one RE in the DD domain for transmission, the number of REs for collecting the multipath energy of the CSI-RS is approximately equal to 1/4 of the total number of REs for the guard period.

In another possible implementation, the power boosting factor X is calculated according to a number A_{K} of REs in the guard period of the CSI-RS with the same delay as the CSI-RS and a number B of REs occupied by the CSI-RS. For example, X = A_{K}/B + 1. In FIG. 2, a number of REs with the same delay as the CSI-RS is 4K, then X = 4K + 1. Alternatively, if only the RE quantity with the same as the delay of the CSI-RS for collecting the multipath energy of the CSI-RS is considered, then X = 2K + 1.

In another possible implementation, the power boosting factor X may be configured in broadcast information or an RRC signaling, or dynamically indicated in DCI.

In some embodiments, in an OTFS system, a guard period is added to a data symbol of a PDSCH/PUSCH, which may correspondingly increase the power boosting of the data symbol. The average power (EPRE) of the data symbol in the PDSCH/PUSCH may be increased by X times, where X is the power boosting factor. A number of single-sided samples of the guard period in the delay dimension is denoted as Ld, and a number of single-sided samples of the guard period in the Doppler dimension is 2Kd.

In a possible implementation, the power boosting factor X is calculated according to a total number A of REs in the guard period of the data symbol and a number B of REs occupied by the data symbol. For example, X = A/B + 1.

In another possible implementation, the power boosting factor X is calculated according to a number Aᵤ of REs in the guard period of the data symbol for collecting multipath energy of the data symbol and a number B of REs occupied by the data symbol. For example, X = Aᵤ/B + 1, where Aᵤ is approximately equal to 1/4 of the total number of REs for the guard period.

In another possible implementation, the power boosting factor X is calculated according to a number A_{K} of REs in the guard period of the data symbol with the same delay as the data symbol and a number B of REs occupied by the data symbol. For example, X = A_{K}/B + 1. The number of REs with the same delay as the data symbol is AK = 4Kd. Alternatively, if only the RE quantity with the same as the delay of the data symbol for collecting the multipath energy of the data symbol is considered, then AK = 2Kd.

In another possible implementation, the power boosting factor X may be configured in broadcast information or an RRC signaling, or dynamically indicated in DCI.

In some embodiments, assuming that guard periods are added to the DMRS and data symbol of the PDSCH/PUSCH, and power boosting of the DMRS may be increased accordingly based on the two guard periods. The average power (EPRE) of the DMRS RE on the PDSCH/PUSCH may be increased by X times to EPRE of the data symbol on the PDSCH/PUSCH, where X is the power boosting factor.

In a possible implementation, the power boosting factor X is calculated according to a total number S of REs in the two guard periods and a number B of REs occupied by the DMRS. For example, X = S/B + 1.

In another possible implementation, the power boosting factor X is calculated according to a number Sᵤ of REs in the two guard periods for collecting multipath energy of the DMRS and the data symbol and a number of REs occupied by the DMRS. For example, X = Sᵤ/B + 1, where Sᵤ is approximately equal to 1/4 of the total number of REs for both guard periods.

In another possible implementation, the power boosting factor X is calculated according to a number S_{K} of REs in both guard periods with the same delay as the DMRS, and a number of REs occupied by the DMRS. For example, X = S_{K}/B + 1.

In another possible implementation, the power boosting factor X may be configured in broadcast information or an RRC signaling, or dynamically indicated in DCI.

The embodiments of the present disclosure also provide an apparatus for implementing any one of the above methods. For example, an apparatus is provided, including units or modules for implementing the steps performed by the terminal in any one of the above methods. For another example, another apparatus is provided, including units or modules for implementing steps performed by the network device (for example, an access network device, a core network function node, a core network device, etc.) in any one of the above methods.

It should be understood that the division of units or modules in the above apparatuses is merely a division of logical functions. In actual implementations, the units may be fully or partially integrated into a single physical entity or may be physically separated. In addition, the units or modules in the apparatus may be implemented in the form of software called by a processor. For example, the apparatus comprises a processor, which is connected to a memory for storing instructions. The processor calls the instructions stored in the memory to implement any one of the above methods or the functions of the units or modules in the apparatus. The processor may be a general-purpose processor, such as a central processing unit (CPU) or a microprocessor, and the memory may be internal or external to the apparatus. Or, the units or modules in the apparatus may be implemented in the form of a hardware circuit. Some or all of the functions of the units or modules may be realized via a design of the hardware circuit. The hardware circuit may be understood as one or more processors. For example, in an implementation, the hardware circuit is an application-specific integrated circuit (ASIC). Functions of some or all of the units are realized by designing logical relationships among components in the circuit. In another implementation, the hardware circuit may be implemented using a programmable logic device (PLD). Taking a field programmable gate array (FPGA) as an example, the FPGA may include a large number of logic gate circuits, and connection relationships among the logic gate circuits are configured by configuration files to realize the functions of some or all of the units or modules. All units or modules of the above apparatus may be fully implemented in the form of software called by the processor, or fully implemented in the form of the hardware circuit, or partially implemented in the form of software called by the processor invoking and the remaining part implemented in the form of the hardware circuit.

In the embodiments of the disclosure, the processor is a circuit with a signal processing capability. In an implementation, the processor may be a circuit with a capability to read and run instructions, such as a CPU, a microprocessor, a graphics processing unit (GPU) (which may be understood as a type of the microprocessor), a digital signal processor (DSP), etc. In another implementation, the processor may implement some functions via a logical relationship of hardware circuits. The logical relationship of the hardware circuit is fixed or reconstructed, for example, a hardware circuit implemented by the ASIC or the PLD, such as the FPGA. In the reconstructed hardware circuit, a process that the processor loads the profiles to implement a hardware circuit configuration may be understood as a process that the processor loads the instructions to implement the functions of some or all of the units or modules. Furthermore, it may also be a hardware circuit designed for artificial intelligence, which may be understood as a type of ASIC, such as a neural network processing unit (NPU), a tensor processing unit (TPU), a deep learning processing unit (DPU), etc.

FIG. 9A is a block diagram illustrating a terminal according to an embodiment of the present disclosure. As shown in FIG. 9A, the terminal 100 may include at least one of: a transceiving module 11, a processing module 12, etc.

In some embodiments, the processing module 12 is configured to determine a power boosting factor for transmitting first information based on an OTFS system. The processing module 12 is configured to determine a transmission power for transmitting the first information according to the power boosting factor. The transceiving module 11 is configured to transmit the first information according to the transmission power of the first information.

The transceiving module 11 is configured to execute at least one of the communication steps (such as S301 to S302, S601 to S604, but not limited herein) performed by the terminal 101 in any of the above methods, which will not be repeated here. Optionally, the processing module 22 is configured to execute at least one of the other steps (e.g., S301-S302, S601-S604, but not limited herein) performed by the terminal 101 in any of the above methods, which will not be repeated here.

In some embodiments, the transceiving module may include a sending module and/or a receiving module. The sending module and the receiving module may be separate or integrated together. Optionally, the transceiving module may be interchanged with a transceiver.

In some embodiments, the processing module may be one module or may include a plurality of sub-modules. Optionally, the plurality of sub-modules respectively execute all or part of the steps required to be performed by the processing module. Optionally, the processing module may be interchanged with a processor.

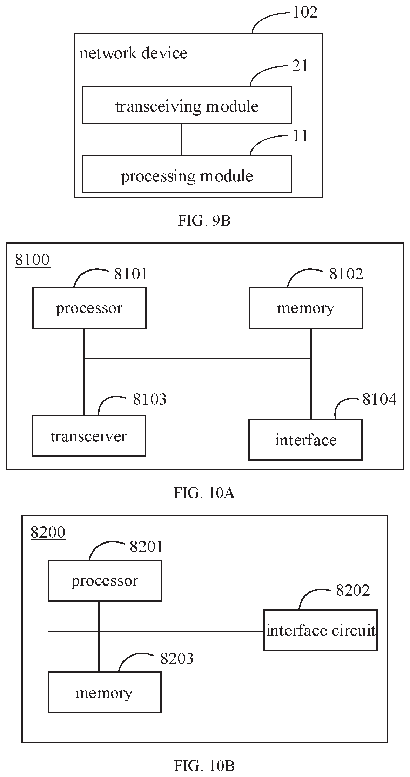

FIG. 9B is a block diagram illustrating a network device according to an embodiment of the present disclosure. As shown in FIG. 9B, the network device 102 may include at least one of: a transceiving module 21, a processing module 22, etc.

In some embodiments, the processing module 22 is configured to determine a power boosting factor for transmitting first information based on an OTFS system. The processing module 22 is configured to determine a transmission power for transmitting the first information according to the power boosting factor. The transceiving module 21 is configured to transmit the first information according to the transmission power of the first information. The transceiving module 21 is used to execute at least one of the communication steps (such as S501 to S502, S601 to S604, but not limited herein) performed by the network device 102 in any of the above methods, which will not be repeated here. Optionally, the processing module 22 is configured to execute at least one of the other steps (e.g., S301 to S303, but not limited herein) performed by the network device 102 in any of the above methods, which will not be repeated here.

In some embodiments, the transceiving module may include a sending module and/or a receiving module. The sending module and the receiving module may be separate or integrated together. Optionally, the transceiving module may be interchanged with a transceiver.

In some embodiments, the processing module may be one module or may include a plurality of sub-modules. Optionally, the plurality of sub-modules respectively execute all or part of the steps required to be performed by the processing module. Optionally, the processing module may be interchanged with a processor.

FIG. 10A is a block diagram illustrating a communication device 8100 according to the embodiments of the present disclosure. The communication device 8100 may be a network device (e.g., an access network device, a core network device, etc.), or a terminal (e.g., a UE, etc.), or a chip, a chip system, or a processor, etc., that supports the network device to implement any one of the above methods, or a chip, a chip system, or a processor, etc., that supports the terminal to implement any one of the above methods. The communication device 8100 may be used to implement the method in the above method embodiments. For details, reference may be made to the description in the above method embodiments.

As shown in FIG. 10A, the communication device 8100 may include one or more processors 8101. The processor 8101 may be a general-purpose processor or a special-purpose processor. For example, it may be a baseband processor or a central processing unit. The baseband processor may be used to process communication protocols and communication data, and the central processing unit may be used to control communication devices (such as base stations, baseband chips, terminals, terminal chips, DU or CU, etc.) to execute computer programs and process computer program data. Optionally, the communication device 8100 is used to perform any one of the above methods. Optionally, one or more processors 8101 are used to call the instructions to cause the communication device 8100 to perform any one of the above methods.

In some embodiments, the communication device 8100 further includes one or more transceivers 8102. When the communication device 8100 includes one or more transceivers 8102, the transceiver 8102 performs at least one of the communication steps such as sending and/or receiving in the above method (e.g., S301-S302, S501-S502, S601-S604, but not limited herein), and the processor 8101 performs at least one of the other steps (e.g., S301-S302, S501-S502, S601-S604, but not limited herein). In an optional embodiment, the transceiver may include a receiver and/or a transmitter, which may be separate or integrated together. Optionally, the terms such as transceiver, transceiving unit, transceiving machine, transceiving circuit, interface circuit, and interface may be used interchangeably; the terms such as transmitter, transmitting unit, transmitting machine, and transmitting circuit may be used interchangeably; and the terms such as receiver, receiving unit, receiving machine, and receiving circuit may be used interchangeably.

In some embodiments, the communication device 8100 further includes one or more memories 8103 for storing data. Optionally, all or part of the memory 8103 may be located outside the communication device 8100. In an optional embodiment, the communication device 8100 may include one or more interface circuits 8104. Optionally, the interface circuit 8104 is connected to the memory 8102. The interface circuit 8104 may be used to receive data from the memory 8102 or other devices, and may be used to send data to the memory 8102 or other devices. For example, the interface circuit 8104 may read data stored in the memory 8102 and send the data to the processor 8101.

The communication device 8100 in the description of the above embodiments may be a network device or a terminal, but the scope of the communication device 8100 described in the disclosure is not limited herein, and the structure of the communication device 8100 may not be limited by FIG. 8A. The communication device may be a stand-alone device or may be part of a larger device. For example, the communication device may be: (1) a stand-alone IC, a chip, a chip system or a subsystem; (2) a collection of ICs including one or more ICs. In some examples, the collection of ICs may also include storage components for storing data and computer programs; (3) an ASIC, such as a modem; (4) a module that may be embedded within other devices; (5) a receiver, a terminal, a smart terminal, a cellular phone, a wireless device, a handheld machine, a mobile unit, an in-vehicle device, a network device, a cloud device, an artificial intelligence device, and the like; and (6) others.

FIG. 10B is a block diagram illustrating a chip 8200 according to the embodiments of the present disclosure. For the case where the communication device 8100 may be a chip or a chip system, reference may be made to the block diagram of the chip 8200 shown in FIG. 108B, which is not limited herein.

The chip 8200 comprises one or more processors 8201. The chip 8200 is used to perform any one of the above methods.

In some embodiments, the chip 8200 further comprises one or more interface circuits 8202. Optionally, the terms such as interface circuit, interface, and transceiver pin may be used interchangeably. In some embodiments, chip 8200 further includes one or more memories 8203 for storing data. Optionally, all or part of the memory 8203 may be located outside of the chip 8200. Optionally, the interface circuit 8202 is connected to the memory 8203. The interface circuit 8202 may be used to receive data from the memory 8203 or other devices, and the interface circuit 8202 may be used to send data to the memory 8203 or other devices. For example, the interface circuit 8202 may read data stored in the memory 8203 and send the data to the processor 8201.

In some embodiments, the interface circuit 8202 performs at least one of the communication steps such as sending and/or receiving in the above method (e.g., S301-S302, S501-S502, S601-S604, but not limited herein). The interface circuit 8202 performs communication steps such as sending and/or receiving in the above method, for example, the interface circuit 8202 performs data interaction between the processor 8201, the chip 8200, the memory 8203 or the transceiver device. In some embodiments, the processor 8201 performs at least one of other steps (e.g., S301-S302, S501-S502, S601-S604, but not limited herein).

The present disclosure also provides a storage medium for storing instructions. When the instructions are running on the communication device 8100, the communication device 8100 is caused to implement any one of the above methods. Optionally, the storage medium is an electronic storage medium. Optionally, the storage medium is a computer-readable storage medium, but it is not limited herein, and it may also be a storage medium readable by other devices. Optionally, the storage medium may be a non-transitory storage medium, but it is not limited herein, and it may also be a transitory storage medium.

The present disclosure also provides a program product. When the program product is executed by the communication device 8100, the communication device 8100 is caused to implement any one of the above methods. Optionally, the program product is a computer program product.

The present disclosure also provides a computer program. When the computer program is executed on a computer, the computer is caused to implement any one of the above methods.

Those skilled in the art will recognize that the units and algorithm steps of the various examples described in conjunction with the embodiments disclosed herein may be implemented in electronic hardware or a combination of computer software and electronic hardware. Whether these functions are implemented in hardware or software depends on the specific application and design constraints of the technical solution. Those skilled in the art may use different methods to implement the described functionality for each specific application, but such implementation should not be considered beyond the scope of the disclosure.

Those skilled in the art may understand that, for the sake of convenience and brevity, for the specific working processes of the systems, devices, and units described above, reference may be made to the corresponding processes in the foregoing method embodiments, which will not be repeated here.

The above description is merely a specific embodiment of the disclosure, but the scope of protection of the disclosure is not limited. Any changes or substitutions that may be easily envisaged by those skilled in the art within the technical scope disclosed in the disclosure should be included within the scope of protection of the disclosure. Therefore, the scope of protection of the disclosure should be determined by the scope of protection of the claims.

## Claims

1. An information transmission method, performed by a terminal, comprising:
determining a power boosting factor; and
determining a transmission power for transmitting first information based on an orthogonal time-frequency space (OTFS) system according to the power boosting factor.

2. The method of claim 1, wherein determining the power boosting factor comprises:
determining a guard period for transmitting the first information based on the OTFS system; and
determining the power boosting factor according to the guard period.

3. The method of claim 2, wherein determining the power boosting factor according to the guard period comprises:
determining the power boosting factor according to a first quantity and a second quantity, wherein the first quantity is a number of resource elements (REs) in the guard period, and the second quantity is a number of REs occupied by the first information;
determining the power boosting factor according to a third quantity and a second quantity, wherein the third quantity is a number of REs in the guard period for collecting multipath energy of the first information, and the second quantity is a number of REs occupied by the first information; or
determining the power boosting factor according to a fourth quantity and a second quantity, wherein the fourth quantity is a number of REs in the guard period with the same delay as the first information, and the second quantity is a number of REs occupied by the first information.

4. The method of claim 1, wherein determining the power boosting factor comprises:
receiving indication information sent by a network device, wherein the indication information indicates the power boosting factor; and
determining the power boosting factor according to the indication information.

5. The method of claim 4, wherein receiving the indication information sent by the network device comprises:
receiving a broadcast message sent by the network device, wherein the broadcast message comprises the indication information;
receiving a radio resource control (RRC) signaling sent by the network device, wherein the RRC signaling comprises the indication information; or
receiving downlink control information (DCI) sent by the network device, wherein the DCI comprises the indication information.

6. The method of any one of claims 1 to 5, wherein the first information comprises at least one of:
a channel state information reference signal (CSI-RS);
a demodulation reference signal (DMRS); or
a data symbol.

7. The method of claim 1, wherein the first information is a demodulation reference signal (DMRS), and determining the power boosting factor comprises:
determining a first guard period for transmitting the DMRS based on the OTFS system;
determining a second guard period for transmitting a data symbol based on the OTFS system; and
determining a power boosting factor of the DMRS according to the first guard period and the second guard period.

8. The method of claim 7, wherein determining the power boosting factor of the DMRS according to the first guard period and the second guard period comprises:
determining the power boosting factor of the DMRS according to a fifth quantity and a sixth quantity, wherein the fifth quantity is a total number of resource elements (REs) in the first guard period and the second guard period, and the sixth quantity is a number of REs occupied by the DMRS;
determining the power boosting factor of the DMRS according to a seventh quantity and a sixth quantity, wherein the seventh quantity is a number of REs in the first guard period and the second guard period for collecting multipath energy of the DMRS and the data symbol, and the sixth quantity is a number of REs occupied by the DMRS; or
determining the power boosting factor of the DMRS according to an eighth quantity and a sixth quantity, wherein the eighth quantity is a number of REs in the first guard period and the second guard period with the same delay as the DMRS, and the sixth quantity is a number of REs occupied by the DMRS.

9. The method of any one of claims 1 to 8, wherein the first information is a demodulation reference signal (DMRS), and determining the transmission power for transmitting the first information based on the OTFS system according to the power boosting factor comprises:
determining a transmission power for transmitting the DMRS as a product of the power boosting factor and energy per resource element (EPRE) on each RE of a data symbol, according to a power boosting factor of the DMRS.

10. The method of any one of claims 7 to 9, wherein the DMRS is a first DMRS of a physical uplink shared channel (PUSCH), and the data symbol is a first data symbol of the PUSCH, or
the DMRS is a second DMRS of a physical downlink shared channel (PDSCH), and the data symbol is a second data symbol of the PDSCH.

11. The method of any one of claims 1 to 8, wherein the first information is a channel state information reference signal (CSI-RS), and determining the transmission power for transmitting the first information based on the OTFS system according to the power boosting factor comprises:
determining a transmission power for transmitting the CSI-RS as a product of the power boosting factor and energy per resource element (EPRE) of second information, according to a power boosting factor of the CSI-RS.

12. The method of claim 11, wherein the second information is:
a secondary synchronization signal (SSS) in an orthogonal frequency division multiplexing (OFDM) system;
an SSS in the OTFS system;
a demodulation reference signal (DMRS) of a physical broadcast channel (PBCH) in the OTFS system; or
a data portion of the PBCH in the OTFS system.

13. The method of any one of claims 1 to 8, wherein the first information is a data symbol, and determining the transmission power for transmitting the first information based on the OTFS system according to the power boosting factor comprises:
determining a transmission power for transmitting the data symbol as a product of energy per resource element (EPRE) of the data symbol and the power boosting factor, according to a power boosting factor of the data symbol.

14. The method of claim 13, wherein the data symbol is a first data symbol of a physical uplink shared channel (PUSCH) or a second data symbol of a physical downlink shared channel (PDSCH).

15. An information transmission method, performed by a network device, comprising:
determining a power boosting factor; and
determining a transmission power for transmitting first information based on an orthogonal time-frequency space (OTFS) system according to the power boosting factor.

16. The method of claim 15, wherein determining the power boosting factor comprises:
determining a guard period for transmitting the first information based on the OTFS system; and
determining the power boosting factor according to the guard period.

17. The method of claim 16, wherein determining the power boosting factor according to the guard period comprises:
determining the power boosting factor according to a first quantity and a second quantity, wherein the first quantity is a number of resource elements (REs) in the guard period, and the second quantity is a number of REs occupied by the first information;
determining the power boosting factor according to a third quantity and a second quantity, wherein the third quantity is a number of REs in the guard period for collecting multipath energy of the first information, and the second quantity is a number of REs occupied by the first information; or
determining the power boosting factor according to a fourth quantity and a second quantity, wherein the fourth quantity is a number of REs in the guard period with the same delay as the first information, and the second quantity is a number of REs occupied by the first information.

18. The method of claim 15, further comprising:
sending indication information to a terminal, wherein the indication information indicates the power boosting factor.

19. The method of claim 18, wherein sending the indication information to the terminal comprises:
sending a broadcast message to the terminal, wherein the broadcast message comprises the indication information;
sending a radio resource control (RRC) signaling to the terminal, wherein the RRC signaling comprises the indication information; or
sending downlink control information (DCI) to the terminal, wherein the DCI comprises the indication information.

20. The method of any one of claims 15 to 19, wherein the first information comprises at least one of:
a channel state information reference signal (CSI-RS);
a demodulation reference signal (DMRS); or
a data symbol.

21. The method of claim 15, wherein the first information is a demodulation reference signal (DMRS), and determining the power boosting factor comprises:
determining a first guard period for transmitting the DMRS based on the OTFS system;
determining a second guard period for transmitting a data symbol based on the OTFS system; and
determining a power boosting factor of the DMRS according to the first guard period and the second guard period.

22. The method of claim 21, wherein determining the power boosting factor of the DMRS according to the first guard period and the second guard period comprises:
determining the power boosting factor of the DMRS according to a fifth quantity and a sixth quantity, wherein the fifth quantity is a total number of resource elements (REs) in the first guard period and the second guard period, and the sixth quantity is a number of REs occupied by the DMRS;
determining the power boosting factor of the DMRS according to a seventh quantity and a sixth quantity, wherein the seventh quantity is a number of REs in the first guard period and the second guard period for collecting multipath energy of the DMRS and the data symbol, and the sixth quantity is a number of REs occupied by the DMRS; or
determining the power boosting factor of the DMRS according to an eighth quantity and a sixth quantity, wherein the eighth quantity is a number of REs in the first guard period and the second guard period with the same delay as the DMRS, and the sixth quantity is a number of REs occupied by the DMRS.

23. The method of any one of claims 15 to 22, wherein the first information is a demodulation reference signal (DMRS), and determining the transmission power for transmitting the first information based on the OTFS system according to the power boosting factor comprises:
determining a transmission power for transmitting the DMRS as a product of the power boosting factor and energy per resource element (EPRE) of a data symbol, according to a power boosting factor of the DMRS.

24. The method of any one of claims 21 to 23, wherein the DMRS is a first DMRS of a physical uplink shared channel (PUSCH), and the data symbol is a first data symbol of the PUSCH, or
the DMRS is a second DMRS of a physical downlink shared channel (PDSCH), and the data symbol is a second data symbol of the PDSCH.

25. The method of any one of claims 15 to 22, wherein the first information is a channel state information reference signal (CSI-RS), and determining the transmission power for transmitting the first information based on the OTFS system according to the power boosting factor comprises:
determining a transmission power for transmitting the CSI-RS as a product of the power boosting factor and energy per resource element (EPRE) of second information, according to a power boosting factor of the CSI-RS.

26. The method of claim 25, wherein the second information is:
a secondary synchronization signal (SSS) in an orthogonal frequency division multiplexing (OFDM) system;
an SSS in the OTFS system;
a demodulation reference signal (DMRS) of a physical broadcast channel (PBCH) in the OTFS system; or
a data portion of the PBCH in the OTFS system.

27. The method of any one of claims 15 to 22, wherein the first information is a data symbol, and determining the transmission power for transmitting the first information based on the OTFS system according to the power boosting factor comprises:
determining a transmission power for transmitting the data symbol as a product of energy per resource element (EPRE) of the data symbol and the power boosting factor, according to a power boosting factor of the data symbol.

28. The method of claim 27, wherein the data symbol is a first data symbol of a physical uplink shared channel (PUSCH) or a second data symbol of a physical downlink shared channel (PDSCH).

29. An information transmission method, comprising:
determining, by a network device, a power boosting factor;
determining, by the network device, a transmission power for transmitting first information based on an orthogonal time-frequency space (OTFS) system according to the power boosting factor;
sending, by the network device, indication information to a terminal, wherein the indication information indicates the power boosting factor;
receiving, by the terminal, the indication information from the network device;
determining, by the terminal, the power boosting factor; and
determining, by the terminal, the transmission power for transmitting the first information based on the OTFS system according to the power boosting factor.

30. A terminal, comprising:
a processing module configured to determine a power boosting factor;
wherein the processing module is configured to determine a transmission power for transmitting first information based on an orthogonal time-frequency space (OTFS) system according to the power boosting factor.

31. A network device, comprising:
a processing module configured to determine a power boosting factor;
wherein the processing module is configured to determine a transmission power for transmitting first information based on an orthogonal time-frequency space (OTFS) system according to the power boosting factor.

32. A terminal, comprising one or more processors and a memory coupled to the one or more processors and storing instructions that, when executed by the processor, cause the terminal to perform the method of any one of claims 1 to 14.

33. A network device, comprising one or more processors and a memory coupled to the one or more processors and storing instructions that, when executed by the processor, cause the network device to perform the method of any one of claims 15 to 28.

34. A communication system, comprising a terminal and a network device, wherein the terminal is configured to perform the method of any one of claims 1 to 14, and the network device is configured to perform the method of any one of claims 15 to 28.

35. A storage medium storing instructions that, when executed on a communication device, cause the communication device to perform the method of any one of claims 1 to 14, or the method of any one of claims 15 to 28.
